# EUROPÄISCHE PATENTSCHRIFT

(11) **EP 4 037 900 B1**
(45) Veröffentlichungstag und Bekanntmachung des Hinweises auf die Patenterteilung: **06.05.2026**
(21) Anmeldenummer: 20771906.3
(22) Anmeldetag: 21.09.2020
(51) Int. Cl.: B32B 9/04, B32B 1/00, B32B 7/023, B32B 9/00, B32B 27/06, B32B 27/20, B32B 27/36, E04F 13/14, E04F 15/08

(54) **LED-BELEUCHTUNGSELEMENTE AUF BASIS VON MEHRSCHICHTKÖRPERN MIT MASSIVSTEINOPTIK**
LED ILLUMINATION ELEMENTS BASED ON MULTILAYER BODIES WITH SOLID STONE APPEARANCE
ÉLÉMENTS D'ÉCLAIRAGE À DEL À BASE DE CORPS MULTICOUCHE À L'APPARENCE DE PIERRE PLEINE

(30) Priorität: 30.09.2019 EP 19200453; 08.04.2020 DE 202020101945 U
(43) Veröffentlichungstag der Anmeldung: 10.08.2022
(73) Patentinhaber: Covestro Deutschland AG, 51373 Leverkusen (DE)
(72) Erfinder: THUST, Torsten, 42929 Wermelskirchen (DE); SCHULZ, Thorsten, 51371 Leverkusen (DE); HAGEN, Rainer, 51377 Leverkusen (DE); PIERMATTEO, Ciro, 51369 Leverkusen (DE); BERGER, Armin, 40764 Langenfeld (DE); HELMIG, Jan, 41541 Dormagen (DE)
(74) Vertreter: Levpat
(86) Internationale Anmeldenummer: PCT/EP2020/076247
(87) Internationale Veröffentlichungsnummer: WO 2021/063719

(56) Entgegenhaltungen:
- WO-A1-2019/020478
- JP-A- 2002 205 500

## Beschreibung

Die Erfindung betrifft einen beleuchtbaren Mehrschichtkörper mit einer aus einem thermoplastischen Material bestehenden Trägerschicht und einer Gesteinsschicht, aufweisend eine Stein-Optik.

Im Bereich der Innenarchitektur von Gebäuden als auch von Automobil-Interieur besteht das Bestreben, Oberflächen mit einer Naturoptik zu versehen. Insbesondere der Eindruck von Holz und Stein schafft eine Atmosphäre von Behaglichkeit, Naturnähe und gehobene Modernität. Stein ist insofern als Oberfläche interessant, da die Schwere, Massivität, die dieses Material ausstrahlt, Luxus suggeriert. Granitelemente beispielsweise als Waschbeckeneinfassung, Arbeitsplatte in Küchen, Boden- oder Wandverkleidung sind, sofern sie gewählt werden, aufgrund der Kosten des Materials tatsächlich ein Luxuselement. Gleichzeitig erschweren sie aufgrund des hohen Eigengewichts die Installation. Es besteht ein Bedarf an Gestaltungselementen mit Steinoptik. Um das Gewicht entsprechender Elemente zu reduzieren, wurden in der Vergangenheit Elemente entwickelt, bei denen statt eines massiven Steinelementes ein Mehrschichtkörper eingesetzt wird, bei dem die Dicke der Steinschicht reduziert ist und zur Stabilisierung stattdessen eine Trägerschicht vorgesehen ist.

Aus der DE 102005038022 A1 beispielsweise ist ein Verbundwerkstoff mit einer formnachgiebigen, aus Kunststoff hergestellten Trägerschicht bekannt, der ohne Klebeschicht mit einer lichtdurchlässigen Natursteinschicht verbunden ist. Die Verwendung des Verbundwerkstoffes als Verkleidungselement insbesondere zur Wand- oder Fassadenverkleidung ist offenbart.

In dem deutschen Gebrauchsmuster DE 202006013010 U1 ist ein flexibles Flachmaterial mit einer Natursteinoberfläche beschrieben, welches neben einer Steinschicht eine flexible Trägerschicht aufweist, wobei das Flachmaterial mit einer Klebeschicht zur Befestigung auf einem Untergrund versehen ist, denn die Verwendung des Flachmaterials als Bodenbelag, aber auch als Verkleidungselement für Wandfläche, Möbel etc. zur Schaffung von dekorativen, massiv wirkenden Steinoberflächen ist vorgesehen.

Auch die WO 2000/068530 A1 beschreibt einen mehrschichtigen Formkörper mit einer Trägerschicht, die eingefärbt ist, und einer oberflächlich sichtbaren, dünnen Natursteinschicht, die durch eine besondere Farbintensität besticht, geprägt durch die Farbe der Trägerschicht. Der Formkörper ist vorzugsweise formnachgiebig, wobei das Korngefüge der Natursteinschicht aufgelöst ist. Der Formkörper weist eine transparente Deckschicht auf, die dem Formkörper trotz des aufgelösten Korngefüges der Natursteinschicht eine homogene, glatte und ggf. auch glänzende Oberfläche verleiht. Als mögliche Verwendungen sind insbesondere Wandpaneele, für den Außen- und den Innenbereich, sowie Autoarmaturenbretter genannt.

WO 2004/052561 A1 beschreibt ein Verfahren zur Herstellung eines Mehrschichtkörpers mit einer Gesteinsschicht, bei dem Polymer auf ein Steinelement aufgebracht wird, das dann an die Oberfläche bindet und zusammen mit einer Schicht Gestein von dem Steinelement abgezogen wird. Auf der Sichtseite des Mehrschichtkörpers kann eine Versiegelung vorgesehen sein. Der Mehrschichtkörper weist gegenüber einer massiven Steinplatte derselben Dicke ein deutlich reduziertes Gewicht auf. Die Nutzbarkeit der Mehrschichtkörper für Fußbodenbeläge und Wandpaneele ist beschrieben.

JP 2002 205500 A offenbart mehrschichtige Körper zur Raumbeleuchtung mit einer Dekorlage, die auch ein dünnes Steinmaterial umfassen kann.

Ebenfalls ein wesentlicher Aspekt in der Interieurgestaltung, sowohl bei Automobilen als auch im Architekturbereich, ist die Ausstattung mit Licht. Neben herkömmlichen Lampen, auch solchen mit Design-Anspruch, werden Beleuchtungselemente unauffällig in Wand-, Schrank- oder Bodenbereiche integriert.

LED-Lichtquellen finden aufgrund ihrer hohen Lebensdauer, ihres geringen Energieverbrauchs und der guten Lichtausbeute vermehrt Anwendung, z.B. in der Automobilindustrie, Luftfahrt, Innenraumbeleuchtung, Fassadengestaltung etc. LED strahlen Licht mit einer vom Halbleitermaterial und der Dotierung abhängigen Wellenlänge ab, so dass mit LED annähernd monochromatisches Licht, auch im Infrarotbereich oder UV-Bereich, erzeugt werden kann.

Es gibt RGB-LED, welche rotes, grünes oder blaues Licht abstrahlen. Für weißes LED-Licht muss Licht unterschiedlicher Wellenlängen kombiniert werden. Dieses wird üblicherweise erreicht durch Kombination einer blauen, einer roten und einer grün abstrahlenden LED zu sogenannten RGB (Rot-Grün-Blau)-Modulen, deren kombinierter wahrgenommener Lichteindruck weiß sein kann, oder durch Lumineszenztechniken, bei denen die gesamte oder ein Teil der LED-Strahlung beispielsweise über Phosphore zu anderen Wellenlängen umgewandelt werden.

So kann weißes Licht, ausgehend von einer im sichtbaren Bereich blau leuchtenden LED, durch Zusatz eines einzigen Phosphors, der einen Teil der Strahlung im blauen Bereich in rot/gelbes Licht umwandelt, erzeugt werden. Diese Form der Erzeugung weißen Lichts ist für kommerzielle Anwendungen aus Kostengründen und aufgrund des hohen Wirkungsgrades von blauen LED bevorzugt.

Alternativ kann aus mit LED erzeugtem UV-Licht mit Hilfe dreier unterschiedlicher Phosphore, die Wellenlängen entsprechend einem RGB-Modul emittieren, weißes Licht erzeugt werden. Sofern diese Technik angewandt wird, werden Zusammensetzungen bevorzugt, die auch eine erhöhte Stabilität gegenüber UV-Strahlung aufweisen, also beispielsweise mit einer UV-Stabilisierung versehen sind.

Zur Einstellung eines von "weiß" abweichenden Gesamtfarbeindrucks in LED-Modulen können die obigen Lichtquellen aber auch nach Bedarf noch weiter modifiziert werden. Diese Modifizierung kann beispielsweise erfolgen durch:
- Kombination mit einem Phosphoreszenzfarbstoff oder
- Kombination mit zusätzlichen Lichtquellen mit einer anderen Emissionscharakteristik.

Aus dem Stand der Technik ist bereits bekannt, die Steinoptik mit einem Lichtelement zu kombinieren. So beschreibt WO 2009/110870 A1 ein Furnier aus einer 0,3 bis 1,5 mm dünnen, noch lichtdurchlässigen, Gesteinsschicht auf einer transparenten, transluzenten oder opaken Trägerschicht, welche aus einem Glas, einem Polycarbonat oder einem anderen geeigneten Material besteht, wobei das Element einer Vielzahl von Anwendungen zugeführt werden kann, u.a. ist auch eine Beleuchtung von der Rückseite aus genannt.

Es besteht aber weiterhin Bedarf nach alternativen Dekor- oder Funktionselementen mit Steinoptik, welche ein möglichst ansprechendes Tag/Nacht-Design aufweisen und ein unter Berücksichtigung der angedeuteten Hochwertigkeit der Oberfläche möglichst geringes Eigengewicht aufweisen. Das Element mit Steinoptik im Tagdesign sollte möglichst massiv wie echter dicker Stein wirken, für das Nachtdesign aber gleichzeitig eine hohe Variabilität der Lichteffekte sowie eine Personalisierbarkeit ermöglichen. Aufgabe war es somit, ein entsprechendes Element bereitzustellen.

Die Aufgabe wird erfindungsgemäß gelöst durch eine LED-Beleuchtungseinheit, umfassend
a) einen Mehrschichtkörper und
b) eine erste LED-Lichtquelle,

wobei der Mehrschichtkörper die folgende Schichten in dieser Reihenfolge umfasst:
   a1) eine Trägerschicht aus einer transluzent-schwarzen oder transluzent-grauen thermoplastischen Zusammensetzung,
   a2) eine Steinschicht mit einer über die gesamte Fläche der Steinschicht gemittelten Dicke von ≤ 2 mm,
   a3) eine transparente Schicht aus einer thermoplastischen Zusammensetzung mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
wobei die erste LED-Lichtquelle an mindestens einer Seitenkante der transparenten Schicht a3 so angeordnet ist, dass die transparente Schicht a3 als Lichtleiter für von der LED-Lichtquelle abgestrahltes Licht nutzbar ist.

Durch die transluzent-dunkle, also die transluzent-schwarze bzw. transluzent-graue Trägerschicht, wirkt der Mehrschichtkörper trotz der sehr geringen Dicke der Gesteinsschicht, selbst bei Dicken von 0,05 mm bis ≤ 0,3 mm, als habe er eine wesentliche dickere, sehr massive Steinschicht. Besonders hochwertig wirkt der Mehrschichtkörper, wenn als Trägermaterial transluzent-schwarzes Material eingesetzt wird. Derartige Materialien sind in der WO 2019/020478 A1 beschrieben, deren Inhalt hinsichtlich geeigneter Zusammensetzungen mit entsprechender Farbwirkung, einschließlich der näheren Beschreibung der einzelnen Komponenten und der als bevorzugt genannten Ausführungsformen sowie der Beispiele, welche die Ausführbarkeit belegen, Teil der vorliegenden Offenbarung sein soll.

Bevorzugt weist die LED-Beleuchtungseinheit außerdem eine zweite Lichtquelle auf, welche so angeordnet ist, dass sie als Hinterleuchtung für den Mehrschichtkörper dient, also von hinten den Mehrschichtkörper durchleuchten kann. Bei der Hinterleuchtung befindet sich die LED-Lichtquelle hinter der Trägerschicht, so dass die transluzente Trägerschicht, die Steinschicht und die transparente Schicht durchleuchtet werden.

Dass die transparente Schicht a3 als Lichtleiter für von der LED-Lichtquelle abgestrahltes Licht nutzbar ist bedeutet nicht, dass im Betriebszustand jeden Tag ununterbrochen die Kantenbeleuchtung auch erfolgen muss. Vielmehr handelt es sich dabei um eine technisch vorgegebene, vom Benutzer wählbare Option. Selbstverständlich kann die Kantenbeleuchtung auch ausgeschaltet sein, wie es insbesondere bei Tageslicht in der Regel der Fall sein wird. Es versteht sich, dass auch unter Einsatz von Sensortechnik oder Zeitschalttechnik eine entsprechende Steuerung der Lichtquelle erfolgen kann. Sofern eine zusätzliche Hinterleuchtung vorgesehen ist, kann diese alternativ zu der Kantenbeleuchtung auswählbar oder gleichzeitig mit ihr einschaltbar sein. Ebenso kann die LED-Beleuchtungseinheit auch genutzt werden, wenn sowohl Hinterleuchtung als auch Kantenbeleuchtung ausgeschaltet sind.

Durch das Licht, die Kantenbeleuchtung, aber auch die Durchleuchtung von hinten, weist der erfindungsgemäße Aufbau neben dem ansprechenden Tagdesign ein hochwertiges Nachtdesign auf, das durch Wahl der Farbe des LED-Licht weiter modifiziert werden kann.

Dabei wird "LED-Beleuchtungseinheit" nicht nur im engen Sinne eines Paketes aus mechanisch verbundenen Einzelteilen verstanden, sondern auch breiter als bloße Kombination (lediglich) funktionell zu einer Einheit verbundener Einzelteile. Ebenso kann es sich aber um eine mechanisch verbundene Kombination handeln. Unter "LED-Beleuchtungseinheit" wird erfindungsgemäß jede Vorrichtung, jedes System verstanden, das einen funktional mit einer LED-Lichtquelle verknüpften Mehrschichtkörper im erfindungsgemäßen Sinne aufweist. Es kann sich um Elemente zur Ausbildung von Fußbodenbelägen, zum Möbelbau, um Wand- oder Türpaneele, Teile von Lampen und Beleuchtungselemente, ein Gehäuse von Haushalts- oder Elektrogeräten oder um Bauteile aus dem Automobilbereich, insbesondere aus dem Bereich der Automobilinnenraumgestaltung, wie Teile der Innenraumverkleidung, Teile von Armaturenbrettern, Teile von Instrumententafeln, Zierleisten, Einstiegsleisten, Teile von Armauflagen, Teile von Mittelkonsolen, handeln.

Die erfindungsgemäßen LED-Beleuchtungseinheiten weisen ein ansprechendes Tag/NachtDesign auf. Ohne eingeschaltete LED-Lichtquelle sieht der Betrachter eine ansprechende, natürliche Steinoptik. Bei eingeschalteter erster LED-Leuchtquelle ergibt sich ein deutlich anderes Erscheinungsbild, denn durch die Kantenbeleuchtung der transparenten Komponente wird eine 3-dimensionale Topographie der Steinschicht erzeugt, abhängig vom verwendeten Steintyp zusätzlich mit glitzernden oder spiegelnden Elementen. Darüber hinaus ist auch die Kantenbeleuchtung mit einer Hinterleuchtung zu weiteren Lichtspielen kombinierbar. Einen besonderen Designaspekt erhält die erfindungsgemäße LED-Beleuchtungseinheit durch die transluzent-dunkle Schicht. Nicht nur, dass dem Tag-Design hierdurch ein besonders massives Aussehen verliehen wird, sondern das Material ist auch trotz der dunklen Farbe in der Lage, farbiges Licht hindurchzulassen. Werden also farbige LED als Lichtquelle verwendet, z.B. rote, grüne oder blaue, etwa in Form von RGB-LED, deren Dioden einzeln angesteuert werden können, gelangt entsprechend farbiges Licht auch durch den Mehrschichtkörper hindurch. Beispielsweise leuchtet der Mehrschichtkörper in Nachtdesign bei eingeschalteter/eingeschalteten roter/roten LED als Hinterleuchtung rot bei erkennbarer Musterung durch die Steinschicht.

"Mehrschichtkörper" im erfindungsgemäßen Sinn ist jeder Aufbau aus mehreren aufeinanderliegenden Schichten, der mindestens die Schichten a1, a2 und a3 umfasst. Es versteht sich, dass weitere Schichten, etwa an den Außenseiten des Mehrschichtkörpers, auf einer oder beiden flächigen Seiten des Mehrschichtkörpers, vorgesehen sein können, insbesondere eine Kratzfestschicht. "An der Außenseite des Mehrschichtkörpers" bedeutet hierbei die Seite der Trägerschicht a1 oder der transparenten Schicht a3, die der Seite, auf der die Steinschicht a2 liegt, gegenüberliegt.

Der Mehrschichtkörper weist die Gestalt einer Platte oder eine von einer Platte abweichende Geometrie auf. Eine Platte ist insbesondere bei Wandelementen, Fliesenelementen, Elementen für Bodenbeläge die übliche Gestalt. LED-Beleuchtungselemente mit einer von einer Platte abweichenden Geometrie, mit dreidimensional geformter Sichtfläche, kommen hingegen vorzugsweise bei Automobil-Interieur-Anwendungen, z.B. einem Autoarmaturenbrett, zum Einsatz. Dreidimensional geformte Teile können entweder direkt im Spritzguss, z.B. nach dem in den Beispielen erläuterten Herstellprozess, mit dreidimensional bearbeiteten Steinplatten gefertigt werden oder durch einen nachträglichen Thermoform-Prozess eines plattenförmigen Mehrschichtkörpers.

"Transparent" im Sinne der vorliegenden Erfindung bedeutet eine Transmission Ty, gemessen bei einer Dicke von 2 mm gemäß ISO 13468-2:2006, von mindestens 85 %, bevorzugt von mindestens 86 %, besonders bevorzugt von mindestens 88 %, und vorzugsweise eine Trübung von weniger als 2,0 %, weiter bevorzugt von weniger als 1,5 %, noch weiter bevorzugt von weniger als 1,0 %, besonders bevorzugt von weniger als 0,8 %, bestimmt nach ASTM D1 003 :20 13 bei einer Schichtdicke von 2 mm.

Als "LED-Lichtquelle" wird im Sinne der vorliegenden Erfindung eine Lichtquelle verstanden, die Licht aussendet, das eine Strahlungscharakteristik aufweist, bei der mehr als 70% der im Bereich von 200 nm bis 3000 nm abgegebenen Intensität im sichtbaren Bereich des Spektrums liegt. Im Sinne der vorliegenden Erfindung ist der sichtbare Bereich definiert als der Wellenlängenbereich von 360 nm bis 780 nm. Insbesondere bevorzugt liegen weniger als 5% der Intensität im Bereich < 360 nm. Bei Betrachtung des Bereichs von 360 nm bis 500 nm weist das LED-Licht im Rahmen der vorliegenden Erfindung eine Peakwellenlänge hinsichtlich seiner Intensität - also Wellenlänge der maximalen Intensität- von 360 nm bis 460 nm auf, weiter bevorzugt von 400 nm bis 460 nm, und besonders bevorzugt von 430 nm bis 460 nm, alternativ besonders bevorzugt von 400 nm bis 405 nm, auf. Zur Ermittlung der Peakwellenlänge wird eine strahlungsäquivalente Größe wie z.B. der Strahlungsfluss, spektral aufgelöst gemessen und in einem kartesischen Koordinatensystem dargestellt. Auf der y-Achse wird die strahlungsäquivalente Größe aufgetragen und auf der x-Achse die Wellenlängen. Das absolute Maximum dieser Kurve ist die "Peakwellenlänge" (Definition nach DIN 5031-1 (1982)). "Von...bis"... schließt hierbei die genannten Grenzwerte ein. Dabei hat das "LED-Licht" bevorzugt eine enge Emissionsbreite mit einer Halbwertsbreite von maximal 60 nm, weiter bevorzugt von maximal 45 nm, noch weiter bevorzugt von max. 30 nm, wobei monochromatisches Licht besonders bevorzugt ist. Hierbei ist die Halbwertsbreite die volle Breite eines Emissionspeaks bei des halber Höhe der Intensität. Grundsätzlich können erfindungsgemäß alle zuvor beschriebenen LED/LED-Techniken separat oder gemeinsam zum Einsatz kommen.

Die Nutzung "als Lichtleiter" bedeutet, dass zumindest ein Teil des von der LED-Lichtquelle abgestrahlten Lichtes durch innere Reflexion durch die transparente Schicht a3 transportiert wird. Bevorzugt wird zumindest ein Teil des von der LED-Lichtquelle abgestrahlten Lichtes an den Grenzflächen der transparenten Schicht a3 mit der Steinschicht a2 und/oder der transparenten Schicht a3 mit der Umgebungsluft bzw. einer ggf. weiter außen liegenden zusätzlichen transparenten Schicht des Mehrschichtkörpers totalreflektiert. "Grenzfläche" ist hierbei die Fläche, an der und/oder durch die zwei oder mehr Schichten des Mehrschichtkörpers oder die Umgebungsluft aneinander angebunden sind, bzw. unmittelbar aneinander grenzen. Grenzflächen werden durch Materialübergänge gebildet.

Edge Lighting, also die Kantenbeleuchtung, ist eine vergleichsweise energieeffiziente Möglichkeit, ansprechende Beleuchtungseffekte zu generieren, da verhältnismäßig wenige LED benötigt werden.

Bei der Trägerschicht a1 handelt es sich um eine Schicht aus einer transluzent-schwarzen oder einer transluzent-grauen thermoplastischen Zusammensetzung. "Aus" bedeutet, dass die Trägerschicht aus der Zusammensetzung besteht.

Unter "transluzent" im Sinne der vorliegenden Erfindung werden Formmassen verstanden, welche eine Transmission Ty, gemessen bei einer Dicke von 2 mm gemäß ISO 13468-2:2006 (D65, 10°), von < 40 % und mindestens 2,5 %, bevorzugt > 2,5 %, weiter bevorzugt < 25 % und > 2,7 %, besonders bevorzugt < 20 % und > 2,9 %, und bevorzugt eine Trübung, bestimmt nach ASTM D1 003 :20 13 bei einer Schichtdicke von 2 mm, von > 95 %, besonders bevorzugt > 99 % aufweisen.

Gemäß der vorliegenden Erfindung werden unter schwarzen Zusammensetzungen solche Zusammensetzungen verstanden, die durch die CIELab-Farbkoordinaten L* kleiner als 40, a* kleiner als 15 und größer als -15, bevorzugt kleiner als 10 und größer als -10, und b* kleiner als 15 und größer als -15, bevorzugt kleiner als 10 und größer als -10, bestimmt bei einer Dicke von 2 mm gemäß ISO 13468-2:2006 (D65, 10°), beschrieben werden. Unter grauen Zusammensetzungen werden gemäß der vorliegenden Erfindung Zusammensetzungen verstanden, die durch die CIELab-Farbkoordinaten L* von mindestens 40 und kleiner als 65, a* kleiner als 15 und größer als -15, bevorzugt kleiner als 10 und größer als -10, und b* kleiner als 15 und größer als -15, bevorzugt kleiner als 10 und größer als -10, bestimmt bei einer Dicke von 2 mm gemäß ISO 13468-2:2006 (D65, 10°), beschrieben werden.

Die thermoplastische Zusammensetzung basiert auf einem thermoplastischen Polymer, welches bevorzugt in einem Anteil von mindestens 50 Gew.-%, weiter bevorzugt mindestens 60 Gew.-%, noch weiter bevorzugt mindestens 75 Gew.-%, besonders bevorzugt mindestens 85 Gew.-%, ganz besonders bevorzugt mindestens 90 Gew.-%, in der thermoplastischen Zusammensetzung enthalten ist.

Geeignete thermoplastische Polymere sind beispielsweise aromatisches Polycarbonat (PC), Polyestercarbonat, Polystyrol (PS), Styrol-Copolymere, ein Polyalkylen wie Polyethylen (PE) oder Polypropylen (PP), ein aromatischer Polyester wie Polyethylenterephthalat (PET) oder Polybutylenterephthalat (PBT), PET-Cyclohexandimethanol-Copolymer (PETG), Polyethylennaphthalat (PEN), ein Poly- oder Copolymethylmethacrylat wie Polymethylmethacrylat (PMMA), ein Polyimid (z.B. PMMI), ein Polyethersulfon, ein thermoplastisches Polyurethan, ein cyclisches Olefinpolymer oder -copolymer (COP bzw. COC) oder deren Mischungen, bevorzugt aromatisches Polycarbonat, aromatischer Polyester, cyclisches Olefinpolymer, einschließlich Olefincopolymer oder Polymethylmethacrylat oder deren Mischungen. Sofern eine Mischung verschiedener Polymere eingesetzt wird, handelt es sich bevorzugt um eine Mischung aus aromatischem Polycarbonat mit PMMA oder einem Polyester.

Besonders bevorzugt ist das Polymer, das in der thermoplastischen Zusammensetzung, aus welcher die Trägerschicht geformt ist, enthalten ist, aromatisches Polycarbonat, alleine oder in Mischung mit einem anderen Polymer, insbesondere einem Polyester.

Besonders bevorzugt enthält die thermoplastische Zusammensetzung der Trägerschicht nur aromatisches Polycarbonat als thermoplastisches Polymer. Aromatische Polycarbonate im erfindungsgemäßen Sinne sind alle bekannten aromatischen Polycarbonate. Dies schließt Homopolycarbonate und Copolycarbonate ein. Sofern im Rahmen der vorliegenden Erfindung nur von "Polycarbonat" an irgendeiner Stelle gesprochen wird, sind insbesondere aromatische Polycarbonate gemeint. Bei dem aromatischen Polycarbonat in einer thermoplastischen Zusammensetzung in einer der Schichten des Mehrschichtkörpers handelt es sich um ein bestimmtes aromatisches Polycarbonat oder um eine Mischung verschiedener aromatischer Polycarbonate, also z.B. zwei verschiedene aromatische Copolycarbonate oder zwei verschiedene aromatische Homopolycarbonate oder ein aromatisches Homopolycarbonat und ein aromatisches Copolycarbonat.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung ebenfalls unter dem Oberbegriff der thermoplastischen, aromatischen Polycarbonate subsumiert.

Die Herstellung der Polycarbonate erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole der Formeln (I) bis (III) 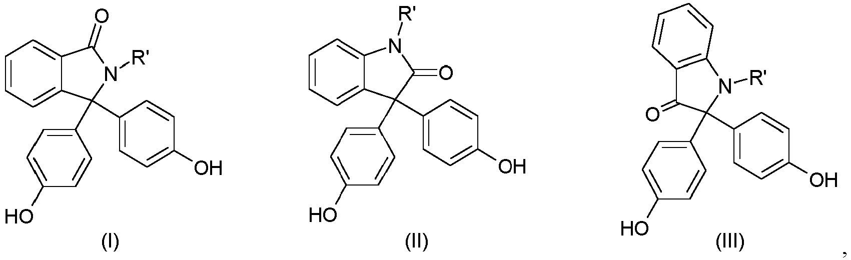 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht. Ganz besonders bevorzugt ist das Homopolycarbonat auf Basis von Bisphenol A.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T. Bendler, Handbook of Polycarbonate Science and Technology, Marcel Dekker New York 2000, S. 72ff." beschrieben.

Im Fall der Homopolycarbonate ist nur eine Dihydroxyarylverbindung eingesetzt, im Fall der Copolycarbonate sind mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind ferner die Phenole, welche ein- oder mehrfach mit C₁- bis C₃₀-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Dihydroxyarylverbindungen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt. Die in den erfindungsgemäßen Zusammensetzungen enthaltenen aromatischen Polycarbonate sind bevorzugt nach dem Grenzflächenverfahren hergestellt.

Bevorzugt werden lineare Polycarbonate eingesetzt.

Die aromatischen Polycarbonate der vorliegenden Erfindung besitzen bevorzugt gewichtsmittlere Molekulargewichte M_{w} zwischen 15.000 und 25.000 g/mol, vorzugsweise zwischen 15.000-24.000 g/mol, weiter bevorzugt zwischen 16.000 - 23.500 g/mol, noch weiter und besonders bevorzugt zwischen 18.000 - 22.500 g/mol. Die Werte gelten für die Ermittlung durch Gelpermeationschromatographie, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Der MVR-Wert des (reinen) aromatischen Polycarbonats, gemessen nach ISO 1133:2012-03 bei 300°C und 1,2 kg, beträgt bevorzugt 14 bis 70 cm³/(10 min), weiter bevorzugt 18 bis 65 cm³/(10 min).

Die M_{W}- und MVR-Angaben beziehen sich auf die in der Zusammensetzung enthaltenen aromatischen Polycarbonate in ihrer Gesamtheit.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Es versteht sich, dass die transluzente thermoplastische Zusammensetzung weitere Komponenten enthalten kann. Grundsätzlich können dieses unterschiedlichste Komponente sein, wie sie in thermoplastischen Zusammensetzungen enthalten sind. Grundsätzlich kommt jede transluzent-schwarze oder transluzent-graue thermoplastische Zusammensetzung in Betracht, solange die Viskosität der Formmasse nicht so stark erhöht ist, dass eine ausreichende Benetzung der Steinoberfläche sowie eine ausreichende Durchdringung der Spalten und Poren im Stein behindert wird.

Geeignete transluzente thermoplastische Zusammensetzungen für die Trägerschicht enthalten
a) mindestens 90 Gew.-% aromatisches Polycarbonat (= Komponente a),
b) eine Farbmittelmischung aus von Komponente c und Komponente e verschiedenen Farbmitteln, enthaltend mindestens zwei Farbmittel in einer Gesamtmenge von bis zu 0,1 Gew.-%,
c) 0,00001 Gew.-% bis 0,05 Gew.-% Ruß,
d) 0,00001 bis 2 Gew.-% mindestens eines Streu-Additivs aus der Gruppe, bestehend aus Acrylat-basierten Streu-Additiven und/oder Silikon-basierten Streu-Additiven,
e) optional bis zu 1,0 Gew.-% mindestens eines Weißpigments,
f) optional ein oder mehrere weitere Additive.

"Bis (zu)" umfasst erfindungsgemäß auch den jeweiligen Grenzwert, inklusive des Rundungsbereiches. "Bis (zu) 2 Gew.-%" umfasst somit neben 2,0 Gew.-% und den darunter liegenden Werten auch z.B. 2,2 Gew.-%.

Die Angaben in Gew.-% beziehen sich jeweils auf die gesamte Zusammensetzung.

Die als Bestandteile geeigneter transluzenter Zusammensetzungen genannten Farbmittel (Komponente b) sind bevorzugt ausgewählt aus der Gruppe, bestehend aus Farbmitteln auf Basis von Anthrachinon, Anthrapyridon, Perinon, Methin, oder Chinolin. "Auf Basis von" bedeutet in diesem speziellen Zusammenhang, dass die Grundstruktur der Farbmittel der Komponente b) die jeweils genannte Verbindung als Grundstruktur aufweisen, welche weiterhin erkennbar ist. Diese Grundstrukturen weisen bevorzugt Substituenten auf.

Grundsätzlich geeignete Farbmittel sind Farbmittel der folgenden Strukturen (4a) bis (24): 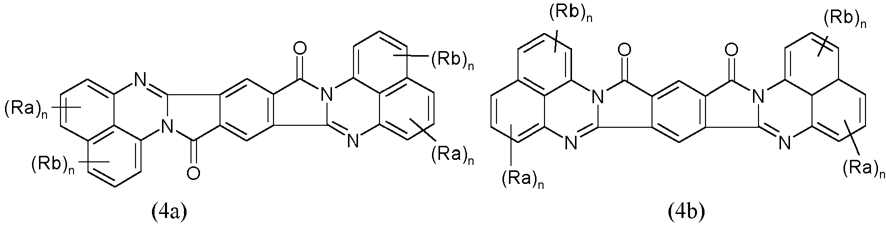 wobei
- Ra und Rb unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl,
- n steht unabhängig vom jeweiligen R für eine natürliche Zahl zwischen 0 und 3, wobei der Rest für n = 0 Wasserstoff ist; noch weiter bevorzugt sind Ra und/oder Rb Cl und stehen in o- und/oder p-Positionen zu den Kohlenstoffatomen, welche die Aminfunktionalitäten tragen, wie z.B. di-orthochlornaphthalino-, di-ortho-, mono-para-chlornaphthalino, sowie mono-ortho-naphthalino. Ferner stellen in einer bevorzugten Ausführungsform Ra und Rb jeweils einen tert-Butylrest dar, welche sich bevorzugt in meta-Position zu den Kohlenstoffatomen, welche die Stickstofffunktionalitäten tragen, befinden.

In einer besonders bevorzugten Ausführungsform ist in allen Ringen n = 0, so dass alle Ra und Rb = H sind. 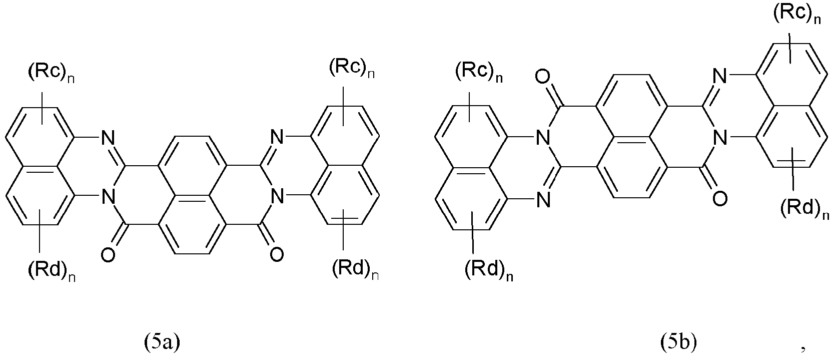 wobei
- Rc und Rd unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl steht,
- n steht unabhängig vom jeweiligen R für eine natürliche Zahl zwischen 0 und 3, wobei der Rest für n = 0 Wasserstoff ist; noch weiter bevorzugt sind Rc und/oder Rd Cl und stehen in o- und/oder p-Positionen zu den Kohlenstoffatomen, welche die Aminfunktionalitäten tragen, wie z.B. di-orthochlornaphthalino-, di-ortho-, mono-para-chlornaphthalino, sowie mono-ortho-naphthalino. Ferner stellen in einer bevorzugten Ausführungsform Rc und Rd jeweils einen tert-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n = 0, so dass alle Rc und Rd = H sind.

Die Strukturen (4a) und (4b) bzw. (5a) und (5b) verhalten sich isomer zueinander. Die jeweiligen Isomere können für sich allein oder in einem Gemisch eingesetzt werden. In einer besonderen Ausführungsform wird ein 1:1 Isomerengemisch (bezogen auf die jeweilige Menge des Isomers im Isomerengemisch in Gew.-%) von (4a) und (4b) bzw. (5a) und (5b) eingesetzt.

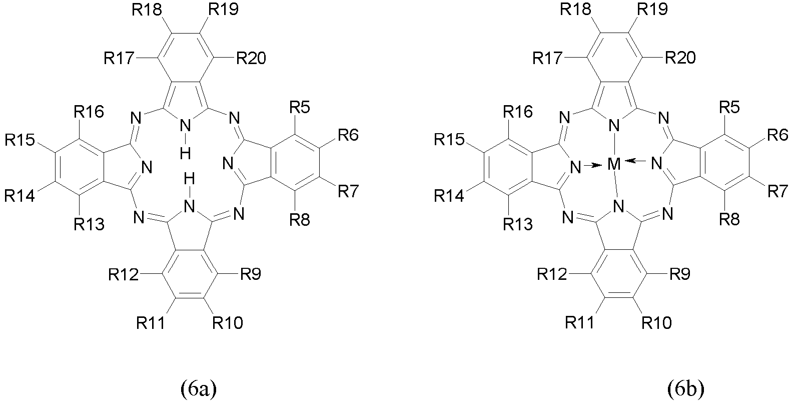

Die Reste R(5-20) sind jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R = H: Aluminiumphthalocyanin, CAS: 14154-42-8), Nickel (mit R = H: Nickelphthalocyanin, CAS: 14055-02-8), Cobalt (mit R = H: Kobaltphthalocyanin, CAS: 3317-67-7), Eisen (mit R = H: Eisenphthalocyanin, CAS: 132-16-1), Zink (mit R = H: Zinkphthalocyanin, CAS: 14320-04-08), Kupfer (mit R = H: Kupferphthalocyanin, CAS: 147-14-8; mit R = H und Cl: Polychlorkupferphthalocyanin, CAS: 1328-53-6; mit R = Cl: Hexadecachlorphthalocyanin, CAS: 28888-81-5; mit R = Br: Hexadecabromphthalocyanin, CAS: 28746-04-5), Mangan (mit R = H: Manganphthalocyanin, CAS: 14325-24-7) und/oder Magnesium.

Insbesondere bevorzugt ist die Kombination von M = Cu und R = H für alle Positionen. So ist eine Verbindung der Struktur (6b) mit M = Cu und R(5-20) = H als Heliogen^{®} Blau K 6911D oder Heliogen^{®} Blau K 7104 KW von der BASF AG, Ludwigshafen erhältlich.

Verbindungen der Struktur (6a) sind z.B. als Heliogen^{®} Blau L 7460 von der BASF AG, Ludwigshafen, erhältlich. 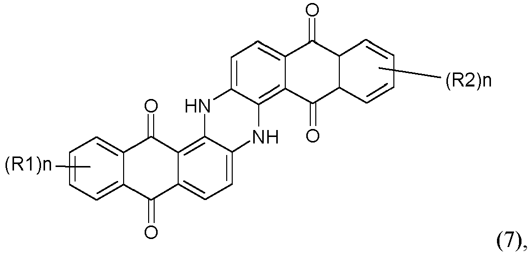 wobei
- R1 und R2 unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl,
- n für eine natürliche Zahl zwischen 0 und 4 steht.

In einer besonders bevorzugten Ausführungsform ist in allen Ringen n = 0, so dass alle R1 und R2 = H sind.

Farbmittel dieser Struktur (7) sind kommerziell erhältlich unter der Paliogen Blau Reihe der BASF AG.

Bei Verwendung von Farbmitteln der Struktur (7) sind insbesondere die Pigmente bevorzugt, die ein Schüttvolumen (bestimmt nach DIN ISO 787-11) von 2 l/kg - 10 l/kg, bevorzugt 3 l/kg - 8 l/kg, eine spezifische Oberfläche (bestimmt nach DIN 66132:1975-07) von 5 m²/g - 60 m²/g, bevorzugt 10 m²/g - 55 m²/g, und einen pH-Wert (bestimmt nach DIN ISO 787-9:1995-04) von 4 - 9 aufweisen. 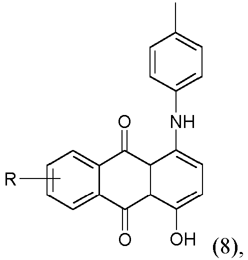 wobei
R ausgewählt ist aus der Gruppe, die aus H und p-Methylphenlyamin-Rest besteht; bevorzugt ist R = H.

Derartige Farbmittel sind z.B. unter dem Handelsnamen Macrolex^{®} Violet B von der Firma Lanxess AG erhältlich. 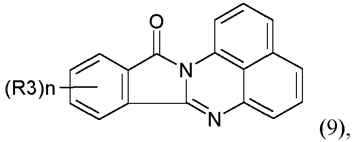 wobei R3 bevorzugt für Halogen, und insbesondere bevorzugt für Cl, steht, wobei besonders bevorzugt n = 4 ist. Weiter bevorzugt ist eine Ausführungsform mit n = 0, so dass R3 = H sind.

Derartige Farbmittel sind z.B. unter Macrolex^{®} Orange 3G oder Macrolex^{®} Rot EG bei der Firma Lanxess AG erhältlich.

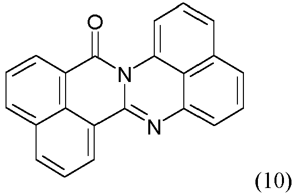

Derartige Farbmittel sind z.B. unter dem Handelsnamen Macrolex^{®} Rot E2G bei der Firma Lanxess AG erhältlich, CAS-Nummer 89106-94-5.

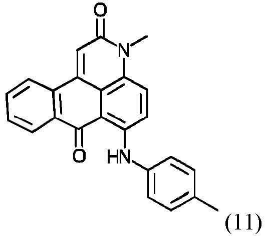

Dieses Farbmittel mit dem Color Index 68210 ist erhältlich unter dem Namen "Macrolex^{®} Rot 5B" oder auch "Solvent Red 52".

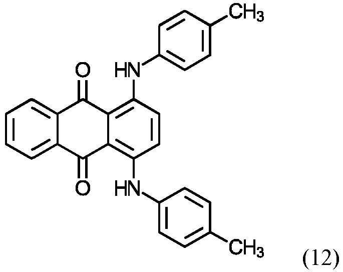

Das Farbmittel der Struktur (12) ist unter dem Namen Macrolex Grün 5B der Firma Lanxess Deutschland GmbH bekannt, Color Index-Nummer 61565, CAS-Nummer: 128-90-3, und ist ein Anthrachinonfarbstoff.

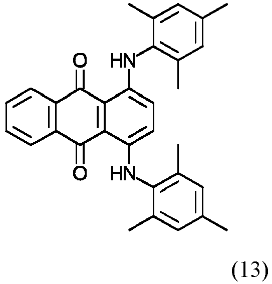

Dieses Farbmittel ist erhältlich unter dem Namen "Keyplast Blue KR" bzw. "Solvent Blue 104", CAS-Nummer 116-75-6, Color-Index-Nummer: 61568.

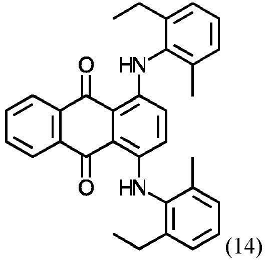

Dieses Farbmittel ist erhältlich unter dem Namen "Macrolex Blue 3R Gran", CAS-Nummer 41611-76-1.

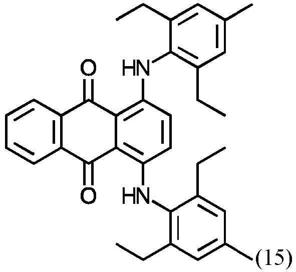

Dieses Farbmittel mit dem Color Index 615290 ist kommerziell erhältlich unter dem Namen "Keyplast Blue E", "Macrolex^{®} Blau RR" oder "Solvent Blue 97".

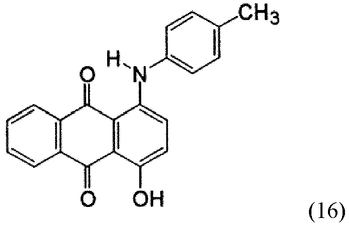

Dieses Farbmittel mit der CAS-Nummer 81-48-1 ist erhältlich unter dem Namen "Macrolex Violet B" oder "Solvent Violet 13", Color Index 60725, bei der Lanxess AG.

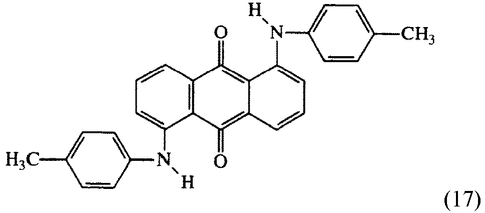

Dieses Farbmittel ist kommerziell erhältlich unter dem Namen "Macrolex^{®} Violet 3R" bzw. "Solvent Violet 36".

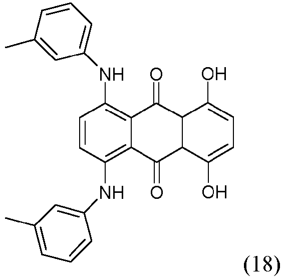

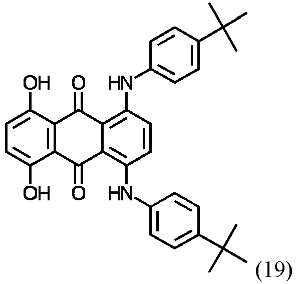

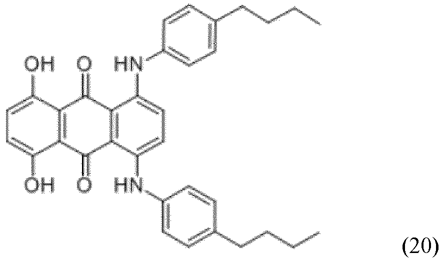

Derartige Farbmittel sind z.B. unter dem Handelsnamen "Macrolex Grün G" bei der Firma Lanxess AG erhältlich.

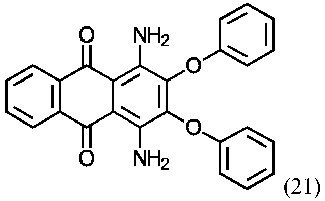

Dieses Farbmittel ist erhältlich unter dem Namen "Macrolex RedViolet R", CAS-Nummer 6408-72-6.

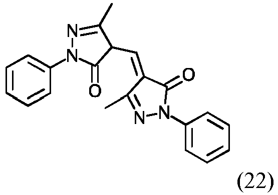

Dieses Farbmittel ist erhältlich unter dem Namen "Macrolex Gelb 3G" bzw. "Solvent Yellow 93" mit dem Color Index 48160.

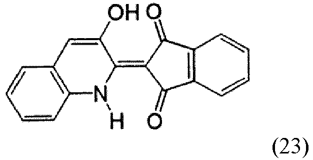

Dieses Farbmittel ist kommerziell erhältlich unter dem Namen "Macrolex Gelb G" bzw. "Solvent Yellow 114" mit dem Color Index 47020;

Die Menge an Farbmitteln der Komponente b) insgesamt in den Formmassen beträgt bis zu 0,1 Gew.-%, bevorzugt bis zu 0,05 Gew.-%, weiter bevorzugt 0,0005 Gew.-% bis 0,02 Gew.-%.

Die Formmassen enthalten bevorzugt ein Farbmittel auf Basis von Anthrachinon und ein weiteres Farbmittel auf Basis von Anthrachinon oder von Anthrapyridon. Weiter bevorzugt enthalten die Formmassen darüber hinaus keine weiteren Farbmittel.

Die Formmassen enthalten noch weiter bevorzugt mindestens ein Farbmittel der folgenden Formel (24): 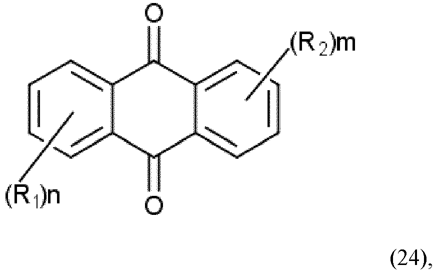 wobei
R₁ für einen substituierten oder unsubstituierten Phenylamin-Rest, bevorzugt für einen unsubstituierten Phenylamin-Rest, steht,
R₂ für einen substituierten oder unsubstituierten Phenylamin-Rest, bevorzugt für einen p-Methylphenylamin-Rest oder für einen 2,6-Diethyl-4-methyl-phenylamin-Rest, steht, n für eine natürliche Zahl zwischen 0 und 4, bevorzugt für 0 oder 1, steht und
m für eine natürliche Zahl zwischen 0 und 4, bevorzugt für 1 oder 2, steht.
Sofern n = 0 ist, befindet sich an dem jeweiligen Rest kein Substituent, welcher H ersetzen würde.

Besonders bevorzugt ist mindestens ein Farbmittel der Formel (15) enthalten.

Ganz besonders bevorzugt ist als weiteres Farbmittel ein Farbmittel der Formel (17) enthalten.

Alternativ ganz besonders bevorzugt ist als weiteres Farbmittel ein Farbmittel der Formel (11) enthalten.

Höchst bevorzugt ist neben den Farbmitteln (15) und (17) bzw. (15) und (11) und ggf. (13) kein weiteres Farbmittel in den erfindungsgemäßen Formmassen enthalten.

Alternativ bevorzugte Farbmittel, welche eines der mindestens zwei Farbmittel der Komponente b) darstellen, sind
- das Farbmittel der Struktur (23)
- das Farbmittel der Struktur (22),
- Farbmittel der Formel (9), insbesondere kommerziell erhältlich unter dem Namen "Macrolex Rot EG" bzw. "Solvent Red 135" mit dem Color Index 564120;
- das Farbmittel der Struktur (16),
- das Farbmittel der Struktur (12).

Farbmittel gemäß der Komponente b umfassen jedenfalls keine Farbmittel der Komponenten c und e.

Für die transluzente Trägerschicht geeignete Zusammensetzungen enthalten bevorzugt 0,00001 bis 0,05 Gew.-%, weiter bevorzugt 0,0003 bis 0,020 Gew.-%, besonders bevorzugt 0,0004 bis 0,015 Gew.-% Ruß, ganz besonders bevorzugt 0,00045 bis 0,014 Gew.-% Ruß (Komponente c).

Der Ruß liegt bevorzugt fein dispergiert in der organischen Polymermatrix vor und ist weiter bevorzugt nanoskalig, insbesondere ein nanoskaliger Farbruß. Geeignete Ruße weisen eine durchschnittliche Teilchengröße auf, bestimmt durch Rasterelektronenmikroskopie, von bevorzugt weniger als 100 nm, weiter bevorzugt weniger als 75 nm, noch weiter bevorzugt weniger als 50 nm und besonders bevorzugt weniger als 40 nm, wobei die durchschnittliche Teilchengröße vorzugsweise größer als 0,5 nm, weiter bevorzugt größer als 1 nm und besonders bevorzugt größer als 5 nm ist, ganz besonders bevorzugt von 10 bis 30 nm, äußerst bevorzugt von 10 bis 20 nm.

Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS^{®}, als nass-verarbeitete Pellets unter den Namen ELFTEX^{®}, REGAL^{®} und CSX^{®}, und in einer flockigen Erscheinungsform unter MONARCH^{®}, ELFTEX^{®}, REGAL^{®} und MOGUL^{®} - erhältlich, alle von Cabot Corporation. Insbesondere bevorzugt sind Ruße, die unter dem Handelsnamen BLACK PEARLS^{®} (CAS-Nr. 1333-86-4) gehandelt werden.

In einer besonders bevorzugten Ausführungsform weisen die Ruß-Typen Partikelgrößen von 10 nm - 30 nm, insbesondere 10 bis 20 nm, auf und haben eine spezifische Oberfläche von vorzugsweise 35 m² - 138 m² pro g (m²/g), bestimmt nach ISO 9277:2014-01 (BET-Verfahren). Der Ruß kann behandelt oder unbehandelt sein. So kann der Ruß mit bestimmten Gasen, mit Silica oder organischen Substanzen, wie z.B. Butyllithium, behandelt sein. Durch eine derartige Behandlung kann eine Modifizierung oder Funktionalisierung der Oberfläche erreicht werden. Dies kann die Kompatibilität zur entsprechend eingesetzten Matrix fördern. Insbesondere bevorzugt sind Ruße, die unter dem Handelsnamen BLACK PEARLS^{®} (CAS-Nr. 1333-86-4) gehandelt werden.

Die Zusammensetzungen, die für das transluzente Material der Trägerschicht eingesetzt werden, enthalten vorzugsweise Streu-Additiv (Komponente d), und zwar in Mengen von 0,00001 Gew.-% bis 2 Gew.-%, bevorzugt 0,01 Gew.-% bis 1,0 Gew.-%, weiter bevorzugt 0,05 Gew.-% bis 0,50 Gew.-%. Es kann sich bei dem Streu-Additiv um ein einziges Streu-Additiv oder auch um eine Mischung mehrerer Streu-Additive handeln. Das Streu-Additiv ist ausgewählt aus der Gruppe der Acrylat-basierten Streu-Additive und/oder der Silikon-basierten Streu-Additive. Es kann sich um ein Streu-Additiv aus dieser Gruppe handeln oder aber auch um eine Mischung. Besonders bevorzugt enthalten die Zusammensetzungen Acrylat-basiertes Streuadditiv als Streumittel. Ganz besonders bevorzugt ist zusätzlich kein Silikon-basiertes Streumittel enthalten.

Streu-Additive im Sinne der Erfindung sind somit keine der Weißpigmente, die als separate Komponente (Komponente e) genannt sind.

Die Streu-Additive verfügen bevorzugt über eine hohe thermische Stabilität bis 300°C, um bei den Verarbeitungstemperaturen von Polycarbonat nicht zersetzt zu werden. Darüber hinaus sollten die Streu-Additive keine Funktionalitäten aufweisen, die zu einem spürbaren Abbau der Polymerkette führen. Bevorzugt sollten die Streu-Additive zu überhaupt keinem Abbau der Polymerkette des Polycarbonats führen.

Bevorzugte Acrylat-basierte Streumittel sind Polyalkylacrylate mit vorzugsweise 1 bis 8 Kohlenstoffatomen in der Alkylgruppe, weiter bevorzugt aufweisend eine mittlere Teilchengröße (Zahlenmittel) von 0,5 µm bis 80 µm, bevorzugt 2 µm bis 40 µm, insbesondere 3 µm bis 15 µm, insbesondere 3 µm bis 9 µm. Mischungen von Alkylacrylaten können ebenfalls eingesetzt werden (Homo- oder Copolymere). Bevorzugt sind die Acrylat-basierten Streumittel vernetzt. Als Vernetzungsmittel sind die für Acrylate bekannten Vernetzungsmittel geeignet. Bevorzugte Vernetzungsmittel sind Glykol-basierte Vernetzer wie insbesondere Ethylenglykoldimethacrylat.

Als Acrylat-basiertes Streu-Additiv besonders bevorzugt sind Polymethylmethacrylat-haltige Streumittel, z.B. polymere Teilchen aus Polymethylmethacrylat und Polybutylacrylat mit Kern-Schale-Morphologie, beispielsweise erhältlich als Paraloid^{®} EXL 5136 oder Paraloid^{®} EXL 5137 von der Firma Rohm&Haas, oder auch teil- oder vollvernetzte sphärische oder nicht-sphärische Acrylatpartikel, wie z.B. solche aus der Techpolymer^{®} MBX Serie der Fa. Sekisui Plastics, Techpolymer^{®} MBX-S oder MBX-8. Streuadditive mit Kern-Schale-Morphologie sind beispielsweise in EP 0 634 445 B1 als "polymeric particle (b)" beschrieben.

Die Silikon-basierten Streu-Additive haben bevorzugt eine mittlere Teilchengröße (Zahlenmittel), von 0,5 µm bis 100 µm, bevorzugt 0,5 µm bis 20 µm, insbesondere 1 µm bis 6 µm, bestimmt mittels Laserbeugung nach ISO 13320:2009.

Silikon-basierte geeignete Streumittel sind Silsesquioxane, organische Silicium-Verbindungen. Ein bevorzugt eingesetztes Silsesquioxan weist die allgemeine Formel [RSiO3/2]n mit R = H, Alkyl, Aryl oder Alkoxy auf. Besonders bevorzugt ist Polymethylsilsesquioxan. Kommerziell erhältliche geeignete Silsesquioxane sind beispielsweise Produkte aus der Produktgruppe Tospearl^{®} der Fa. Momentive, USA, Tospearl^{®} TSR9000 oder 120S oder Ganzpearl Si-020 der Firma Ganz Chemical Co., Ltd.

Sofern für die Trägerschicht kein transluzent-schwarzes, sondern ein transluzent-graues Material gewählt wird, enthält die jeweilige Zusammensetzung bis zu 1,0 Gew.-% Weißpigment. Als Weißpigment ist bevorzugt Zinkoxid, Zinksulfid, Bariumsulfat und/oder Titandioxid enthalten, weiter bevorzugt Titandioxid und/oder Bariumsulfat, besonders bevorzugt ist als Weißpigment Titandioxid enthalten. Das Weißpigment kann lediglich aus einer dieser Komponenten bestehen oder aber ein oder mehrere andere Weißpigmente aus dieser Liste oder ausgewählt aus der Gruppe der Weißpigmente allgemein, enthalten.

Sofern Bariumsulfat enthalten ist, beträgt der Anteil an der Gesamtzusammensetzung üblicherweise 0,1 bis 1,0 Gew.-% Bariumsulfat.

Sofern das Weißpigment Titandioxid umfasst, beträgt die Menge des Weißpigments bevorzugt 0,03 bis 1,0 Gew.-%, weiter bevorzugt 0,03 bis 0,5 Gew.-%, besonders bevorzugt bis 0,1 Gew.-%. Ganz besonders bevorzugt sind hierbei 95 Gew.-% des Weißpigmentes, bezogen also auf die Gesamtmenge an Weißpigment, Titandioxid. Äußerst bevorzugt ist Titandioxid hierbei das einzige Weißpigment.

Die Zusammensetzungen der Trägerschicht können optional ein oder mehrere, von den Komponenten b) bis e) verschiedene, weitere Additive (Komponente f) enthalten, solange diese nicht dazu führen, dass die Transluzenz verlorengeht. Üblicherweise sind 0 bis 5 Gew.-%, bevorzugt 0,05 Gew.-% bis 3 Gew.-%, weiter bevorzugt 0,1 Gew.-% bis 1 Gew.-% weitere Additive enthalten. Hier wie auch an anderen Stellen, soweit nicht anders angegeben, beziehen sich die Gew.-%-Angaben auf die jeweilige Gesamtzusammensetzung.

Übliche Polymeradditive, wie sie als Komponente f enthalten sein können, sind z.B. in EP-A 0 839 623, WO-A 96/15102, EP-A 0 500 496 oder "Plastics Additives Handbook", Hans Zweifel, 5th Edition 2000, Hanser Verlag, München beschrieben. Solche weiteren Additive sind beispielsweise Entformungsmittel, Antioxidantien, Flammschutzmittel, Antitropfmittel, Thermostabilisatoren, optische Aufheller, Fließverbesserer, von Komponente d verschiedene Lichtstreumittel, Antistatika, UV-Absorber und/oder IR-Absorber.

Bevorzugt sind als weitere Additive in der Zusammensetzung der Trägerschicht nur ein oder mehrere Entformer, UV-Absorber, Farbmittel, Streupartikel und/oder ein oder mehrere Thermostabilisatoren enthalten.

Geeignete Thermostabilisatoren sind ausgewählt aus den Gruppen der Phosphate, Phosphite, Phosphonite und Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit (Irgafos^{®} 168), Diisodecylpentaerythritoldiphosphit, Bis(2,4-di-tert-butylphenyl)pentaerythritoldiphosphit, Bis(2,6-di-tert-butyl-4-methylphenyl)pentaerythritol-diphosphit, Bis(2,4-di- cumylphenyl)-pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, Bis(2,6-di-tert-butyl-4-methylphenyl)pentaerythritoldiphosphite (PEP-36 ), 5-Butyl-5-ethyl-2-(2,4,6-tri-tert-butylphenoxy)-1,3,2-dioxaphosphiran, Triphenylphosphin (TPP), Trialkylphenylphosphin, Bisdiphenylphosphinoethan oder ein Trinaphthylphosphin. Insbesondere bevorzugt werden Triphenylphosphin (TPP), Irgafos^{®} 168 (Tris(2,4-di-tert-butyl-phenyl)-phosphit), PEP-36 (Bis(2,6-di-tert-butyl-4-methylphenyl)pentaerythritoldiphosphite) und Tris(nonylphenyl)phosphit oder deren Mischungen eingesetzt.

Phosphatstabilisatoren sind beispielsweise Phosphate der Formel (IV) oder Mischungen dieser Phosphate. 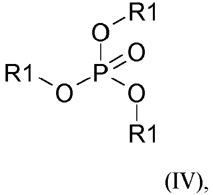 wobei R1 unabhängig voneinander für verzweigte Alkylreste und/oder optional substituierte Arylreste stehen, wobei der Alkylrest vorzugsweise ein C₁- bis C₁₈-Alkyl, weiter bevorzugt ein C₁- bis C₈-Alkylrest ist. Sofern ein Phosphatstabilisator enthalten ist, ist dieser besonders bevorzugt Tri-(2-ethylhexyl)-phosphat (Triisooctylphosphat).

Der Arylrest ist vorzugsweise mit C₁- bis C₈-Alkyl, verzweigtem C₁- bis C₈-Alkyl, oder Cumyl substituiert, wobei die Substituenten gleich oder verschieden sein können, gleiche Substituenten jedoch bevorzugt sind. Bevorzugt sind die Arylreste in den Positionen 2 und 4 oder 2, 4 und 6 substituiert. Ganz besonders bevorzugt sind tert-Butyl-Substituenten in diesen Positionen.

Weiter bevorzugt sind alle R1 gleich.

Ferner können Antioxidantien wie phenolische Antioxidantien, beispielsweise alkylierte Monophenole, alkylierte Thioalkylphenole, Hydrochinone und alkylierte Hydrochinone eingesetzt werden. Vorzugsweise werden Irganox^{®} 1010 (Pentaerythrit-3-(4-hydroxy-3,5-di-tert-butylphenyl)propionat; CAS: 6683-19-8) und/oder Irganox 1076^{®} (2,6-Di-tert-butyl-4-(octadecanoxycarbonylethyl)phenol) eingesetzt. Besonders bevorzugt wird Irganox 1076^{®} (2,6-Di-tert-butyl-4-(octadecanoxycarbonylethyl)phenol) eingesetzt.

In einer speziellen Ausführungsform werden die erfindungsgemäßen Phosphinverbindungen gemeinsam mit einem Phosphit oder einem phenolischen Antioxidans oder einer Mischung aus den beiden letztgenannten Verbindungen eingesetzt.

In einer bevorzugten Ausführungsform besteht das Stabilisatorsystem aus Triphenylphosphin, einem Gemisch von Triphenylphosphin und einem phenolischem Antioxidans wie Irganox^{®} 1076 oder Irganox^{®} 1010 und/oder einer Kombination von phenolischem Antioxidans und Phosphit, bevorzugt aus einem Gemisch aus Irganox^{®} 1076 bzw. Irganox^{®} 1010 und Irgafos^{®} 168 bzw. PEP-36.

In einer weiteren bevorzugten Ausführungsform besteht das Stabilisatorsystem aus einem Phosphin, einem Phosphit und einem phenolischen Antioxidans, beispielsweise Triphenylphosphin, Irganox^{®} 1076 und Irgafos^{®} 168.

Geeignete Entformungsmittel sind beispielsweise die Ester oder Teilester von ein- bis sechswertigen Alkoholen, insbesondere des Glycerins, des Pentaerythrits oder von Guerbet-Alkoholen. Einwertige Alkohole sind beispielsweise Stearylalkohol, Palmitylalkohol und Guerbet-Alkohole. Ein zweiwertiger Alkohol ist beispielsweise Glycol; ein dreiwertiger Alkohol ist beispielsweise Glycerin; vierwertige Alkohole sind beispielsweise Pentaerythrit und Mesoerythrit; fünfwertige Alkohole sind beispielsweise Arabit, Ribit und Xylit; sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀- bis C₃₆-Monocarbonsäuren und gegebenenfalls Hydroxymonocarbonsäuren, vorzugsweise mit gesättigten, aliphatischen C₁₄- bis C₃₂-Monocarbonsäuren und gegebenenfalls Hydroxymonocarbonsäuren.

Die kommerziell erhältlichen Fettsäureester, insbesondere des Pentaerythrits und des Glycerins, können herstellungsbedingt < 60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren. Besonders geeignete Entformungsmittel als Komponente f) der erfindungsgemäßen Zusammensetzung sind z.B. Pentaerythritoltetrastearat (PETS) oder Glycerinmonostearat (GMS). Gemäß einer speziellen Ausführungsform der Erfindung enthält die Gesamtzusammensetzung Entformungsmittel in einem Anteil von 0 ppm bis 3000 ppm, bevorzugt 100 ppm bis 1000 ppm, und weiter bevorzugt 150 ppm bis 500 ppm bezogen auf die Masse der Gesamtzusammensetzung.

Bevorzugte UV-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Ganz besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxy-benzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Cyano-3,3-diphenyl-2-propensäure-2-ethylhexylester, 2,2-Bis[[(2-cyano-1-oxo-3,3-diphenyl-2-propenyl)oxy]-methyl]-1,3-propandiylester (- 9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, Ciba Spezialitätenchemie, Basel) oder Tetraethyl-2,2'-(1,4-phenylen-dimethyliden)-bismalonat (Hostavin^{®} B-Cap, Clariant AG).

Äußerst bevorzugte UV-Absorber sind beispielsweise Tinuvin^{®} 360, Tinuvin^{®} 350, Tinuvin^{®} 329, Hostavin^{®} B-CAP, besonders bevorzugt TIN 329 und Hostavin^{®} B-Cap.

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor. Gemäß einer speziellen Ausführungsform der Erfindung enthält die Zusammensetzung Ultraviolett-Absorber in einer Menge von 0 ppm bis 6000 ppm, bevorzugt 500 ppm bis 5000 ppm, und weiter bevorzugt 1000 ppm bis 2000 ppm, bezogen auf die Gesamtzusammensetzung.

Antitropfmittel sind bevorzugt Fluor-enthaltende Antitropfmittel, insbesondere Polytetrafluorethylen.

Die Dicke der Trägerschicht kann nach der jeweiligen gewünschten Anwendung frei gewählt werden. Üblicherweise wird die Dicke der Trägerschicht so gewählt sein, dass die Trägerschicht dem Mehrschichtkörper eine ausreichende Stabilität verleiht, aber nicht mehr Material als nötig eingesetzt wird, da dieses nicht nur unnötige Kosten verursacht, sondern auch das Gewicht des Bauteils unnötig erhöht. Insbesondere bei Automobil-Interieur-Elementen kommt es aber darauf an, dass man für die funktionellen Bauteile ein möglichst geringes Gewicht erreicht. Bevorzugt liegt die Dicke daher im Bereich von 0,5 bis 6 mm, weiter bevorzugt im Bereich 1,0 bis 5 mm, noch weiter bevorzugt im Bereich von 1,5 bis 4 mm. Diese Dicke ist über die gesamte Fläche der Trägerschicht aus thermoplastischem Material gemittelt. Die Abweichung der Dicke an jedem einzelnen Punkt der Schicht von der über die gesamte Fläche gemittelten Dicke beträgt bevorzugt maximal ± 10%, weiter bevorzugt maximal ± 5%. Da die Steinschicht üblicherweise eine leicht unregelmäßig Oberfläche aufweist und das Material hier in die Zwischenräume läuft, gibt es an vielen Punkten eine unbedeutende, leichte Abweichung von dem gemittelten Wert.

Vorzugsweise deckt die Trägerschicht die Steinschicht vollflächig ab oder überragt diese an wenigstens einer Seitenkante.

Bei der Steinschicht a2 handelt es sich um eine Schicht aus einem metamorphen Gestein oder einem Sedimentgestein. Hier liegen mehrere relativ diskrete Schichten vor, welche sich von dem Natursteinmaterial als dünne Lagen abziehen lassen. Geeignete Steinmaterialien sind beispielsweise schiefrig ausgebildete Tonsteine bzw. Schieferton, Kalkstein, Sandstein, Schlammstein, Tonschiefer, Quarzit, Phyllit, Glimmerschiefer, Chloritschiefer, Gneis, Talkschiefer, Blau- bzw. Gluakophanschiefer, Buntschiefer, Prasinit, Epidot-Amphibolit, Amphibolit, Embrechit, Agmatit, Kalkschiefer, Mylonit, Argillit, Migmatit, Marmor, Serpentinit, Eklogit, Schist, Fruchtschiefer oder Granulit. Bevorzugt umfasst die Steinschicht Buntschiefer, Glimmschiefer, Kalkstein, Sandstein oder Marmor, weiter bevorzugt besteht sie aus einem dieser Gesteine. Grundsätzlich kann die Steinschicht aus verschiedenen Steinelementen zusammengesetzt sein und beispielsweise ein Mosaik aus einer oder mehreren Steintypen darstellen. Bevorzugt besteht die Steinschicht jedoch aus einem Steintyp und ist einstückig gearbeitet.

Die Dicke der Steinschicht beträgt ≤ 2 mm, bevorzugt ≤ 1 mm, weiter bevorzugt ≤ 0,5 mm, besonders bevorzugt ≤ 0,3 mm, wobei es sich um eine über die gesamte flächige Seite der Steinschicht gemittelte Dicke handelt. "Flächige Seite" ist die Seite der Gesteinsschicht, die bei dem Mehrschichtkörper zur Sichtseite hin orientiert ist, d.h. dazu bestimmt ist, das optische Erscheinungsbild des Mehrschichtkörpers zu prägen, sowie die dieser Seite gegenüberliegende Seite. Die Steinschicht ist in jedem Fall so dünn zu wählen, dass sie noch in gewünschtem Maße lichtdurchlässig ist. Die Steinschicht weist bevorzugt ein zusammenhängendes Korngefüge auf.

Es ist ferner bevorzugt, dass die Steinschicht zumindest an der der transparenten Schicht zugewandten Flachseite eine Topographie aufweist, deren maximale Rauheit Rz vorzugsweise wenigstens 0,1 µm beträgt, bevorzugt wenigstens 0,5 µm, weiter bevorzugt 0,5 bis 10.000 µm, besonders bevorzugt 1,0 bis 5.000 µm. Die maximale Rauheit Rz ist dabei durch die den absoluten vertikalen Abstand zwischen der maximalen Profilspitzenhöhe und der maximalen Profiltaltiefe definiert. Die Messtrecke beträgt hierbei vorzugsweise wenigstens 2 cm. Diese Werte der maximalen Rauheit Rz sind deshalb von Vorteil, weil bei seitlicher Anstrahlung über eine oder mehrere Seitenkanten diese Topographie optisch durch Schattenwurf, Lichtbrechung und dergleichen an der rauen Steinoberfläche optisch herausgestellt und der mit dem Auge wahrgenommene dreidimensionale Eindruck verstärkt wird.

Bei der transparenten Schicht a3 handelt es sich ebenfalls um eine Schicht aus einer thermoplastischen Zusammensetzung. Es gilt hier grundsätzlich das bereits zu der Trägerschicht ausgeführte, mit der Einschränkung, dass die Komponenten der thermoplastischen Zusammensetzung so zu wählen sind, dass eine im Sinne der Erfindung transparente Zusammensetzung erhalten wird. Bevorzugt sind als weitere Additive in der Zusammensetzung der transparenten Schicht nur ein oder mehrere Entformer, UV-Absorber und/oder ein oder mehrere Thermostabilisatoren enthalten,

Die transparente Schicht muss eine Dicke aufweisen, die ausreichend, aber nicht zu dick ist, damit durch diese Schicht eine Kantenbeleuchtung des Mehrschichtkörpers erfolgen kann. Gleichzeitig besteht ein Interesse daran, die Dicke der transparenten Schicht a3 möglichst gering zu halten, um das Gewicht der LED-Beleuchtungseinheit nicht unnötig zu erhöhen. Die Dicke liegt daher im Bereich von 1 bis 6 mm, weiter bevorzugt im Bereich 2 bis 5 mm, noch weiter bevorzugt im Bereich von 2,5 bis 4 mm, wobei die Dicke über die gesamte Fläche der transparenten Schicht gemittelt ist. Die Abweichung der Dicke an jedem einzelnen Punkt der transparenten Schicht von der über die gesamte Fläche gemittelten Dicke beträgt bevorzugt maximal ± 10%.

Um eine ausreichende Fließfähigkeit der thermoplastischen Zusammensetzungen und damit eine ausreichend gute Verarbeitbarkeit zu gewährleisten, sollte der MVR-Wert der Zusammensetzungen (gemessen nach ISO 1133:2012-03 bei 300°C und 1,2 kg) bevorzugt zwischen 14 cm³/(10 min) und 80 cm³/(10 min), weiter bevorzugt zwischen 20 cm³/(10 min) und 80 cm³/(10 min), noch weiter bevorzugt zwischen 30 cm³/(10 min) und 80 cm³/(10 min) und besonders bevorzugt zwischen 32 cm³/(10 min) und 75 cm³/(10 min) liegen.

Für eine gute mechanische Stabilität sollte die Kerbschlagzähigkeit der thermoplastischen Zusammensetzungen, gemessen nach ISO 179/1eA:2010 bei Raumtemperatur an 3 mm dicken Probekörpern, bevorzugt mindestens 40 kJ/m² betragen, weiter bevorzugt zwischen 50 kJ/m² und 130 kJ/m², noch weiter bevorzugt zwischen 55 kJ/m² und 120 kJ/m² und besonders bevorzugt zwischen 55 kJ/m² und 80 kJ/m².

Die gemeinsame Dicke der Schichten Trägerschicht a1, Steinschicht a2 und transparente Schicht a3 des Mehrschichtkörpers der erfindungsgemäßen Beleuchtungseinheit beträgt bevorzugt 1,5 bis 12 mm, weiter bevorzugt 3 bis 10 mm, noch weiter bevorzugt 4 bis 8 mm. Es ist bevorzugt, dass die transparente Schicht die Steinschicht weitestgehend vollflächig abdeckt, insbesondere zu wenigstens 90%.

Eine erfindungsgemäß bevorzugte LED-Beleuchtungseinheit umfasst
a) einen Mehrschichtkörper und
b) eine erste LED-Lichtquelle,
wobei der Mehrschichtkörper die folgende Schichten in dieser Reihenfolge umfasst:
a1) eine Trägerschicht aus einer transluzent-schwarzen oder transluzent-grauen, thermoplastischen Zusammensetzung, wobei die thermoplastische Zusammensetzung auf aromatischem Polycarbonat basiert,
a2) eine Steinschicht mit einer über die gesamte Fläche der Steinschicht gemittelten Dicke ≤ 2 mm,
a3) eine transparente Schicht aus einer thermoplastischen Zusammensetzung, basierend auf aromatischem Polycarbonat, mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
und
wobei die erste LED-Lichtquelle an mindestens einer Seitenkante der transparenten Schicht a3 so angeordnet ist, dass die transparente Schicht a3 als Lichtleiter für von der LED-Lichtquelle abgestrahltes Licht nutzbar ist und wobei die Zusammensetzung der Trägerschicht
a) mindestens 90 Gew.-%, ganz besonders bevorzugt 95 Gew.-%, aromatisches Polycarbonat,
b) eine Farbmittelmischung aus von Komponente c und Komponente e verschiedenen Farbmitteln, enthaltend mindestens zwei Farbmittel, vorzugsweise ausgewählt aus der Gruppe, bestehend aus Farbmitteln auf Basis von Anthrachinon, Anthrapyridon, Perinon, Methin, oder Chinolin, wobei weiter vorzugsweise ein Farbmittel ein Anthrachinon-basiertes Farbmittel und das andere Farbmittel ebenfalls ein Anthrachinon-basiertes Farbmittel oder ein Anthrapyridon-basiertes Farbmittel ist, insbesondere eine Mischung aus den Farbmitteln der Strukturen (15) und (11) oder (15) und (17) ist,
   in einer Gesamtmenge von bis zu 0,1 Gew.-% an Farbmitteln gemäß Komponente b),
c) 0,0003 bis 0,020 Gew.-%, insbesondere 0,0004 bis 0,015 Gew.-%, Ruß, insbesondere nanoskaligen Ruß, besonders bevorzugt als einzigen Ruß,
d) 0,05 bis 1,0 Gew.-%, insbesondere bis 0,50 Gew.-%, mindestens eines Streu-Additivs aus der Gruppe, bestehend aus Acrylat-basierten Streu-Additiven und/oder Silikon-basierten Streu-Additiven, wobei als Streu-Additiv bevorzugt ein Silsesquioxan enthalten ist, welches ganz besonders bevorzugt das einzige Streumittel gemäß Komponente d) ist,
e) optional bis zu 1,0 Gew.-%, bevorzugt 0,03 bis 1,0 Gew.-%, mindestens eines Weißpigments, bevorzugt enthaltend ein Weißpigment aus der Gruppe, bestehend aus Titandioxid und/oder Bariumsulfat, insbesondere 0,04 bis 0,08 Gew.-% Titandioxid, äußerst bevorzugt als einziges Weißpigment,
f) optional ein oder mehrere weitere Additive, vorzugsweise ausgewählt aus der Gruppe, bestehend aus Entformungsmitteln, Antioxidantien, Flammschutzmitteln, Antitropfmitteln, Thermostabilisatoren, optischen Aufhellern, UV-Absorber, Fließverbesserern, von Komponente d verschiedenen Lichtstreumitteln, Antistatika und/oder IR-Absorbern,
enthält.

Eine erfindungsgemäß weiter bevorzugte LED-Beleuchtungseinheit umfasst
a) einen Mehrschichtkörper und
b) eine erste LED-Lichtquelle,
c) bevorzugt eine zweite LED-Lichtquelle,
   wobei der Mehrschichtkörper die folgende Schichten in dieser Reihenfolge umfasst:
   a1) eine Trägerschicht aus einer transluzent-schwarzen oder transluzent-grauen thermoplastischen Zusammensetzung mit einer über die gesamte Fläche der Trägerschicht gemittelten Dicke von 0,5 bis 6 mm,
   a2) eine lichtdurchlässige Steinschicht, bevorzugt ausgewählt aus der Gruppe Buntschiefer, Glimmschiefer, Kalkstein, Sandstein und/oder Marmor, mit einer Dicke von ≤ 2 mm, bevorzugt ≤ 1 mm,
   a3) eine transparente Schicht aus einer thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
   und

wobei die erste LED-Lichtquelle an mindestens einer Seitenkante der transparenten Schicht a3 so angeordnet ist, dass die transparente Schicht a3 als Lichtleiter für von der LED-Lichtquelle abgestrahltes Licht nutzbar ist und
die ggf. vorhandene zweite LED-Lichtquelle so angeordnet ist, dass sie den Mehrschichtkörper von hinten durchleuchtet (Hinterleuchtung) und wobei die Zusammensetzung der Trägerschicht
   a) mindestens 90 Gew.-% besonders bevorzugt mindestens 95 Gew.-%, ganz besonders bevorzugt bis 99,95 Gew.-%, aromatisches Polycarbonat,
   b) eine Farbmittelmischung aus von Komponente c und Komponente e verschiedenen Farbmitteln, enthaltend mindestens zwei Farbmittel, wobei ein Farbmittel ein Anthrachinon-basiertes Farbmittel und das andere Farbmittel ein Anthrapyridon-basiertes Farbmittel ist,
      wobei die Gesamtmenge an Farbmitteln gemäß Komponente b) bis zu 0,1 Gew.-% beträgt,
   c) 0,002 bis 0,020 Gew.-% Ruß, wobei als Ruß insbesondere nanoskaliger Ruß enthalten ist, äußerst ganz besonders bevorzugt ein nanoskaliger Farbruß, äußerst bevorzugt als einzigen Ruß,
   d) 0,05 bis 1,0 Gew.-%, insbesondere bis 0,5 Gew.-%, mindestens eines Streu-Additivs aus der Gruppe, bestehend aus Acrylat-basierten Streu-Additiven und/oder Silikon-basierten Streu-Additiven,
   f) optional ein oder mehrere weitere Additive, ausgewählt aus der Gruppe, bestehend aus Entformungsmitteln, Antioxidantien, Flammschutzmitteln, Antitropfmitteln, Thermostabilisatoren, UV-Absorbern, Fließverbesserern, von Komponente d verschiedenen Lichtstreumitteln, Antistatika und/oder IR-Absorbern,
   enthält
und besonders bevorzugt frei ist von Weißpigment.

Eine erfindungsgemäß noch weiter bevorzugte LED-Beleuchtungseinheit umfasst
a) einen Mehrschichtkörper und
b) eine erste LED-Lichtquelle,
c) bevorzugt eine zweite LED-Lichtquelle,
wobei der Mehrschichtkörper die folgende Schichten in dieser Reihenfolge umfasst:
a1) eine Trägerschicht aus einer transluzent-schwarzen, thermoplastischen Zusammensetzung mit einer über die gesamte Fläche der Trägerschicht gemittelten Dicke von 0,5 bis 6 mm,
a2) eine Steinschicht, bevorzugt ausgewählt aus der Gruppe Buntschiefer, Glimmschiefer, Kalkstein, Sandstein und/oder Marmor, mit einer über die gesamte Fläche der Steinschicht gemittelten Dicke von ≤ 2 mm, bevorzugt ≤ 1 mm,
a3) eine transparente Schicht aus einer thermoplastischen Zusammensetzung, wobei die thermoplastische Zusammensetzung mindestens 50 Gew.-%, weiter bevorzugt mindestens 75 Gew.-%, noch weiter bevorzugt mindestens 90 Gew.-% aromatisches Polycarbonat enthält, mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
und
wobei die erste LED-Lichtquelle an mindestens einer Seitenkante der transparenten Schicht a3 so angeordnet ist, dass die transparente Schicht a3 als Lichtleiter für von der LED-Lichtquelle abgestrahltes Licht nutzbar ist und
die ggf. vorhandene zweite LED-Lichtquelle so angeordnet ist, dass sie den Mehrschichtkörper von hinten durchleuchtet und wobei
die Zusammensetzung der Trägerschicht
   a) mindestens 90 Gew.-% besonders bevorzugt mindestens 95 Gew.-%, ganz besonders bevorzugt bis 99,95 Gew.-%, aromatisches Polycarbonat,
   b) eine Farbmittelmischung aus von Komponente c und Komponente e verschiedenen Farbmitteln, enthaltend mindestens zwei Farbmittel, wobei ein Farbmittel ein Anthrachinon-basiertes Farbmittel und das andere Farbmittel ein Anthrapyridon-basiertes Farbmittel ist,
      wobei die Gesamtmenge an Farbmitteln gemäß Komponente b) bis zu 0,1 Gew.-% beträgt,
   c) 0,002 bis 0,02 Gew.-% Ruß, wobei als Ruß insbesondere nanoskaliger Ruß enthalten ist, äußerst ganz besonders bevorzugt ein nanoskaliger Farbruß, äußerst bevorzugt als einzigen Ruß,
   d) 0,05 bis 1,0 Gew.-%, insbesondere bis 0,50 Gew.-%, mindestens eines Streu-Additivs aus der Gruppe, bestehend aus Acrylat-basierten Streu-Additiven und/oder Silikon-basierten Streu-Additiven, wobei als Streu-Additiv bevorzugt ein Silsesquioxan enthalten ist, welches ganz besonders bevorzugt das einzige Streumittel gemäß Komponente d) ist,
   f) optional ein oder mehrere weitere Additive, ausgewählt aus der Gruppe, bestehend aus Entformungsmitteln, Antioxidantien, Flammschutzmitteln, Antitropfmitteln, Thermostabilisatoren, UV-Absorbern, Fließverbesserern, von Komponente d verschiedenen Lichtstreumitteln, Antistatika und/oder IR-Absorbern,
enthält
und besonders bevorzugt frei ist von Weißpigment.

Besonders bevorzugt enthalten die transluzenten, thermoplastischen Zusammensetzungen der Trägerschicht keine weiteren Komponenten, wobei die Gruppe f der weiteren Additive aus der Gruppe der Entformungsmittel, Antioxidantien, Flammschutzmittel, UV-Absorber, Fließverbesserer, von Komponente d verschiedenen Lichtstreumittel, Antistatika, IR-Absorber, Antitropfmittel, optischen Aufheller und/oder Thermostabilisatoren besteht.

Ganz besonders bevorzugt umfasst der Mehrschichtkörper keine weiteren Schichten außer den Schichten a1 bis a3 und ggf. vorhandene Schutzschichten, insbesondere transparente Kratzfestschichten.

Die Herstellung der Formmassen für die Schichten und schließlich der Schichten des Mehrschichtkörpers aus thermoplastischen Zusammensetzungen, ausgehend von den beschriebenen Komponenten, erfolgt mit gängigen Einarbeitungsverfahren durch Zusammenführung, Vermischen und Homogenisieren, wobei insbesondere die Homogenisierung, bevorzugt in der Schmelze unter Einwirkung von Scherkräften, stattfindet. Dazu werden das aromatische Polycarbonat und die ggf. weiteren Komponenten der Polycarbonat-Formmasse auf üblichen Schmelze-Mischaggregaten wie z.B. auf Ein- oder Mehrwellen-Extrudern oder auf Knetern in der Schmelze unter üblichen Bedingungen vermischt, extrudiert und granuliert. Die Additive können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich beispielsweise um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone und optional eine Entgasungszone, an der ein absoluter Druck p von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, besonders bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Nach der Herstellung der Formmassen können diese durch Extrudieren, Heißpressen, Spritzprägen oder Spritzgießen in entsprechende Formteile überführt werden. Für die Herstellung der erfindungsgemäßen Formteile bevorzugt ist hierbei das Spritzgießen oder Spritzprägen, insbesondere das Spritzgießen. Dabei wird im ersten Schritt eine Steinplatte in ein Spritzgießwerkzeug eingelegt und mit einer Formmasse überspritzt. Nach der Entformung und einer weiteren Abkühlzeit wird die zu einem thermoplastischen Formteil erstarrte Formmasse von der Steinplatte abgezogen, wobei eine dünne Steinschicht auf dem Formteil verbleibt. Dieses Formteil mit der dünnen Steinschicht wird im zweiten Schritt erneut in ein Spritzgießwerkzeug eingelegt und die Seite mit der Steinschicht mit einer weiteren Formmasse überspritzt. Nach Ablauf der Kühlzeit wird der fertige Mehrschichtkörper entformt.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder in "Anleitung zum Bau von Spritzgießwerkzeugen", Menges/Michaeli/Mohren, München; Wien: Hanser, 1999, ISBN 3-446-21258-2 beschrieben.

Spritzguss umfasst hier alle Spritzgießverfahren einschließlich Mehrkomponentenspritzguss und Spritzprägen.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden.

Die Mehrschichtkörper können sowohl als Platten geformt sein, als auch eine dreidimensional geformte Oberfläche aufweisen, d.h. eine von einer Platte abweichende Gestalt, wobei unter Platte ein Körper verstanden wird, bei dem für die drei Paare gegenüberliegender Seiten der Schichten a1, a2 und a3 - untereinander und alle zusammengilt, dass diese planparallel oder zumindest annähernd planparallel zueinander sind.

Wie zuvor beschrieben, können die Mehrschichtkörper auf einer oder beiden der äußeren flächigen Seiten einen Kratzfestlack als Teil einer Schutzschicht bzw. als Schutzschicht aufweisen. Dieser ist bevorzugt ein Polysiloxanlack, hergestellt nach dem Sol-Gel-Prozess. Die Schutzschicht enthält besonders bevorzugt außerdem mindestens einen UV-Absorber. Die Schutzschicht weist eine hohe Abrieb- und Kratzfestbeständigkeit auf und erfüllt damit insbesondere die Funktion einer Kratzfestbeschichtung.

Kommerziell erhältliche Systeme sind z.B. AS4000, SHC5020 und AS4700 von Momentive Performance Materials. Derartige Systeme sind z.B. in US 5,041,313 A, DE 3,1213,85 A1, US 5,391,795 A und WO 2008/109072 A1 beschrieben. Die Synthese dieser Materialien erfolgt üblicherweise über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Es sind verschiedene Methoden bekannt, um eine Kratzfestbeschichtung auf Kunststoffartikel aufzubringen. Die Kratzfestbeschichtungen können beispielsweise über Tauchverfahren, Spincoating, Sprühverfahren oder eine Fließbeschichtung, bevorzugt über Tauch- oder Fließverfahren, aufgebracht werden. Die Aushärtung kann thermisch oder mittels UV-Bestrahlung erfolgen. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein.

Die Schutzschicht kann ein Ein- oder Mehrschichtsystem sein und somit auch eine Kombination zweier oder mehrerer Schichten. Insbesondere kann die Schutzschicht aus den Schichten Decklackschicht a' und Primer-Schicht a" bestehen, wobei die Primerschicht zwischen der Decklackschicht und der zu schützenden Schicht angeordnet ist.

Kratzfestbeschichtungen auf Polysiloxanbasis werden bevorzugt über Tauch- oder Fließverfahren aufgebracht. Die Aushärtung erfolgt bei Temperaturen von 50 °C - 140 °C.

Es wird bevorzugt ein UV-Absorber enthaltender Primer eingesetzt, um die Haftung des Kratzfestlackes auf der zu beschichtenden Schicht zu verbessern. Der Primer kann weitere Stabilisatoren wie z.B. HALS-Systeme (Stabilisatoren auf Basis sterisch gehinderter Amine), Haftvermittler und/oder Fließhilfsmittel enthalten. Das jeweilige Harz, welches das Basismaterial der Primerschicht bildet, kann aus einer Vielzahl von Materialien ausgewählt werden und ist beispielsweise in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy- und Alkyd-Systeme oder Mischungen dieser Systeme eingesetzt werden. Das Harz wird meistens in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig, nachdem ein Großteil des Lösemittels kurzzeitig bei Raumtemperatur entfernt wurde. Kommerziell erhältliche Primer-Systeme sind z.B. SHP470, SHP470-FT2050 und SHP401 der Firma Momentive Performance Materials. Derartige Beschichtungen sind z.B. in US 6,350,512 B1, US 5,869,185 A, EP 1308084 A1 und WO 2006/108520 A1 beschrieben.

In einer bevorzugten Ausführungsform, die eine besonders gute Bewitterungsstabilität bewirkt, umfasst die Schutzschicht eine
Kratzfestbeschichtung auf Polysiloxanbasis, enthaltend
i. mindestens einen UV-Absorber aus der Gruppe der Benzophenone, Resorcine, 2-(2-Hydroxyphenyl-)Bentriazole, Hydroxyphenyl-s-Triazine, 2-Cyanacrylate, Oxalanilide
   und/oder einen UV-Inhibitor aus der Gruppe der sterisch gehinderten Amine (HALS), insbesondere basierend auf 2,2,6,6-Tetramethylpiperidin oder dessen Derivaten;
ii. mindestens eine Kombination von einem organo-modifizierten Silan mit einem Kiesel-Sol. Das organo-modifizierte Silan ist beispielsweise ein Methyltrialkoxy- oder Dimethyldialkoxysilan;
und optional, in einer weiter bevorzugten Ausführungsform, zusätzlich eine auf der zu beschichtenden Schicht angeordnete, als Haftvermittler zwischen der Kratzfestbeschichtung auf Polysiloxanbasis und der zu beschichtenden Schicht wirkende Primerschicht (Schicht a"), enthaltend mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), insbesondere basierend auf 2,2,6,6-Tetramethylpiperidin sowie dessen Derivaten, wobei die Dicke der Primerschicht 0,3 µm bis 8 µm, bevorzugt 1,1 µm bis 4,0 µm, beträgt.

Ganz besonders bevorzugt umfasst die Schutzschicht keine weiteren Schichten.

Unter "Derivaten" werden erfindungsgemäß solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Die Polysiloxanschicht enthält bevorzugt siliciumorganische Verbindungen der Formel RₙSiX₄₋ₙ, und/oder partielle Kondensate derselben, wobei die Reste R gleich oder verschieden sind und für einen linearen oder verzweigten, gesättigten oder ein- oder mehrfach ungesättigten oder aromatischen Kohlenwasserstoffrest stehen, die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und n 0,1,2 oder 3, bevorzugt 1 oder 2, ganz besonders bevorzugt 1, ist. R steht bevorzugt für gesättigte, verzweigte oder unverzweigte Alkylreste mit 1 bis 20 Kohlenstoffatomen und/oder für ein- oder mehrfach ungesättigte verzweigte oder unverzweigte Alkenylreste mit 2 bis 20 Kohlenstoffatomen oder aromatische Gruppen mit 6 bis 12 Kohlenstoffatomen. Weiter bevorzugt weisen die Alkyl- bzw. Alkenylreste bis zu 12, noch weiter bevorzugt bis zu 8 Kohlenstoffatome auf. Besonders bevorzugt sind alle Reste Methyl und/oder Phenyl. Besonders bevorzugt steht X für eine Alkoxygruppe, ganz besonders bevorzugt für eine C₁- bis C₄-Alkoxygruppe, beispielsweise für eine Methoxy- oder eine Ethoxygruppe.

Die Silicium-Verbindungen RₙSiX₄₋ₙ sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

Bei Verwendung der vorgenannten Siloxansysteme sind Trockenschichtdicken von 3 µm - 20 µm bevorzugt, weiter bevorzugt 5 µm - 15 µm, besonders bevorzugt 6 µm - 12 µm. Mit Trockenschichtdicke ist hier die Schichtdicke des Lackes nach Applikation und anschließendem Verdampfen des Lösemittels und anschließender thermischer oder UV-Härtung gemeint.

Es können anstelle von Primer/Kratzfestbeschichtungs-Kombinationen auch Einkomponenten-Hybrid-Systeme, entweder thermisch- oder UV-härtend, für die erfindungsgemäßen Mehrschichtkörper eingesetzt werden.

Diese sind z.B. in EP 0570165 A2 oder WO 2008/071363 A2 oder DE 2804283 A beschrieben. Kommerziell erhältliche Hybrid-Systeme sind z.B. unter den Namen PHC 587, PHC 587C als thermisch härtende oder UVHC 3000 und UVHC 5000 als UV-härtende Lacke der Firma Momentive Performance Materials erhältlich. Weiter erfindungsgemäß geeignete, kommerziell erhältliche UV-härtende Lacksysteme sind UVT 610 und UVT 820 der Firma Redspot.

In einem besonders bevorzugten Verfahren zur Herstellung der erfindungsgemäßen Formteile erfolgt die Applikation der Schutzschicht über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Weitere mögliche Applikationsverfahren sind Tauchen, Rakeln, Walzen, Sprühen oder Spincoating. Hierbei können die Bauteile, sowohl hängend als auch in einem entsprechenden Warenträger gelagert, beschichtet werden.

Bei größeren und/oder 3D-Bauteilen - d.h. Bauteilen mit dreidimensionaler Oberfläche, die also eine von einer Platte abweichende Geometrie aufweisen- wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung zur Ausbildung der Schutzschicht ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

### Beispiele

Die Erfindung wird anhand der nachfolgenden Beispiele näher erläutert, ohne jedoch darauf beschränkt zu sein.

### Eingesetzte Materialien

Transparentes Makrolon^{®} Ai der Covestro Deutschland AG: aromatisches Polycarbonat auf Basis von Bisphenol A mit einer MVR von 19 cm³/(10 min), bestimmt bei 300 °C und 1,2 kg gemäß DIN ISO 1133:2012-03, enthaltend UV-Absorber und Entformer. Ty, gemessen bei einer Dicke von 2 mm gemäß ISO 13468-2:2006 (D65, 10°): 88,07 %. Trübung, bestimmt nach ASTM D1003:2013 bei einer Schichtdicke von 2 mm: 0,68 %.

Transluzent schwarz eingefärbtes Makrolon^{®} Ai der Covestro Deutschland AG: aromatisches Polycarbonat auf Basis von Bisphenol A mit einer MVR von 19 cm³/(10 min), bestimmt bei 300 °C und 1,2 kg gemäß DIN ISO 1133:2012-03, enthaltend UV-Absorber und Entformer. Ty, gemessen bei einer Dicke von 2 mm gemäß ISO 13468-2:2006 (D65, 10°): 3,84 %. Trübung, bestimmt nach ASTM D1003:2013 bei einer Schichtdicke von 2 mm: 100 %.

Zur Vorbehandlung wurden die Polycarbonate für 4 Stunden bei 120 °C in Trockenluft getrocknet.

Steinplatten Buntschiefer, Steinplatten Glimmerschiefer und Steinplatten Sandstein mit einer Dicke von jeweils etwa 3 mm, die auf die Maße 200 mm x 150 mm zugeschnitten wurden.

### Herstellung der Formkörper

Auf einer KM GX400 Spritzgießmaschine der KraussMaffei Group GmbH wurde zu jeder der Steinplatten ein mehrschichtiges Formteil mit den Maßen 200 mm x 150 mm x 6 mm hergestellt.

Dazu wurde in einem ersten Schritt jeweils eine Steinplatte, die vorab bei 115 °C für 15 Minuten in einem Wärmeschrank vortemperiert worden war, in die erste Werkzeughälfte eines Stahlwerkzeugs mit den Forminnenmaßen 200 mm x 150 mm x 6 mm eingelegt. Nach dem Schließen des Werkzeugs wurde das bei 305 °C aufgeschmolzene transparente Polycarbonat-Material mit einem maximalen spezifischen Einspritzdruck von ca. 2000 bar in das Werkzeug auf die Steinoberfläche eingespritzt. Die Temperatur der Werkzeugwand lag auf der Auswerferseite bei 100 °C, auf der gegenüberliegenden Einspritzseite bei 90 °C. Die Einspritzzeit betrug 2,5 Sekunden. Nach einer Nachdruckzeit von 15 Sekunden (spezifischer Nachdruck: 850 bar) und einer Kühlzeit von 35 Sekunden wurde das Werkzeug geöffnet und das Formteil entnommen.

Nach etwa 5 Minuten Abkühlen dieses Formteils bei Raumtemperatur wurde die auf die Steinoberfläche aufgespritzte Polycarbonatplatte von der Steinplatte abgezogen. Dabei verblieb eine sehr dünne Steinschicht fest auf der Polycarbonatplatte, welche eine über die gesamte Fläche gemittelte Dicke von < 2 mm aufwies.

Diese Polycarbonatplatte mit der dünnen Steinschicht, welche im Mittel eine Dicke von etwas mehr als 3 mm aufwies, wurde erneut bei 115 °C für 15 Minuten in einem Wärmeschrank vortemperiert. Parallel wurde das Polycarbonat-Material im Einspritzzylinder von transparent auf transluzent schwarz gewechselt. Anschließend wurde diese Platte wieder in die erste Werkzeughälfte des Stahlwerkzeugs mit den Forminnenmaßen 200 x 150 x 6 mm eingelegt, die Oberfläche mit der Steinschicht zur zweiten Werkzeughälfte zeigend. Nach dem Schließen des Werkzeugs wurde das bei 305 °C aufgeschmolzene transluzent schwarze Polycarbonat-Material mit einem maximalen spezifischen Einspritzdruck von ca. 2000 bar in das Werkzeug auf die transparente Polycarbonatplatte mit der Steinoberfläche eingespritzt. Die Temperatur der Werkzeugwand lag auf der Auswerferseite bei 90 °C, auf der gegenüberliegenden Einspritzseite bei 65 °C. Die Einspritzzeit betrug 2,2 Sekunden. Nach einer Nachdruckzeit von 15 Sekunden (spezifischer Nachdruck: 800 bar) und einer Kühlzeit von 30 Sekunden wurde das Werkzeug geöffnet und das fertige Formteil mit einer Gesamtdicke von etwa 6 mm entnommen.

Für eine Beleuchtung der Formkörper wurden diese in eine Lichtbox eingespannt, welche für die Aufnahme von Platten mit den Maßen 200 mm x 150 mm gefertigt wurde. Diese Lichtbox besitzt einen rund um die Platte laufenden LED-Streifen für die Kantenbeleuchtung sowie eine rückseitige RGB-LED-Platine für die Hinterleuchtung. Kantenbeleuchtung und Hinterleuchtung können dabei sowohl separat als auch kombiniert betrieben werden. Dabei wurden die zuvor in der Beschreibung genannten Effekte erzielt.

## Patentansprüche

1. LED-Beleuchtungseinheit, umfassend
a) einen Mehrschichtkörper und
b) eine erste LED-Lichtquelle,
wobei der Mehrschichtkörper die folgenden Schichten in dieser Reihenfolge umfasst:
a1) eine Trägerschicht aus einer transluzent-schwarzen oder transluzent-grauen thermoplastischen Zusammensetzung,
a2) eine Steinschicht mit einer über die gesamte Fläche der Steinschicht gemittelten Dicke von ≤ 2 mm,
a3) eine transparente Schicht aus einer thermoplastischen Zusammensetzung mit einer über die gesamte Fläche gemittelten Dicke von 1 bis 6 mm, welche auf der Seite der Steinschicht a2 liegt, welche die Sichtseite des Mehrschichtkörpers in der LED-Beleuchtungseinheit darstellt,
wobei die erste LED-Lichtquelle an mindestens einer Seitenkante der transparenten Schicht a3 so angeordnet ist, dass die transparente Schicht a3 als Lichtleiter für von der LED-Lichtquelle abgestrahltes Licht nutzbar ist.

2. LED-Beleuchtungseinheit nach Anspruch 1, **dadurch gekennzeichnet, dass** die Zusammensetzung der Trägerschicht a1 und/oder die Zusammensetzung der transparenten Schicht a3 auf aromatischem Polycarbonat basiert/basieren.

3. LED-Beleuchtungseinheit nach einem der vorhergehenden Ansprüche, **dadurch gekennzeichnet, dass** die Dicke der Trägerschicht a1, gemittelt über die gesamte Fläche der Trägerschicht, 0,5 bis 6 mm beträgt.

4. LED-Beleuchtungseinheit nach einem der vorhergehenden Ansprüche, **dadurch gekennzeichnet, dass** der Mehrschichtkörper eine von einer Platte abweichende Geometrie aufweist und/ oder dass der Mehrschichtkörper neben optional vorhandenen Schutzschichten keine weiteren Schichten aufweist.

5. LED-Beleuchtungseinheit nach einem der vorhergehenden Ansprüche, **dadurch gekennzeichnet, dass** die über die gesamte Fläche der Steinschicht a2 gemittelte Dicke der Steinschicht ≤ 0,3 mm ist.

6. LED-Beleuchtungseinheit nach einem der vorhergehenden Ansprüche, **dadurch gekennzeichnet, dass** die Steinschicht a2 zumindest an der der transparenten Schicht a3 zugewandten Flachseite eine Topographie aufweist, deren maximale Rauheit R_{z} vorzugsweise wenigstens 0,1 µm beträgt, wobei die maximale Rauheit R_{z} bestimmt wird wie in der Beschreibung definiert.

7. LED-Beleuchtungseinheit nach einem der vorhergehenden Ansprüche, **dadurch gekennzeichnet, dass** die transparente Schicht a3 die Steinschicht a2 weitestgehend vollflächig abdeckt und/ oder dass die Trägerschicht a1 die Steinschicht a2 vollflächig abdeckt oder an wenigstens einer Seitenkante überragt.

8. LED-Beleuchtungseinheit nach einem der vorhergehenden Ansprüche, **dadurch gekennzeichnet, dass** die LED-Beleuchtungseinheit eine zweite LED-Lichtquelle aufweist, welche so angeordnet ist, dass sie den Mehrschichtkörper von hinten durchleuchtet und/ oder dass die zweite LED-Lichtquelle eine oder mehrere RGB-LED aufweist.

9. LED-Beleuchtungseinheit nach einem der vorhergehenden Ansprüche, **dadurch gekennzeichnet, dass** die transluzente, thermoplastische Zusammensetzung der Trägerschicht a1
a) mindestens 90 Gew.-% aromatisches Polycarbonat,
b) eine Farbmittelmischung aus von Komponente c und Komponente e verschiedenen Farbmitteln, enthaltend mindestens zwei Farbmittel
in einer Gesamtmenge von bis zu 0,1 Gew.-% an Farbmitteln gemäß Komponente b),
c) 0,00001 Gew.-% bis 0,05 Gew.-% Ruß,
d) 0,00001 bis 2 Gew.-% mindestens eines Streu-Additivs aus der Gruppe, bestehend aus Acrylat-basierten Streu-Additiven und/oder Silikon-basierten Streu-Additiven,
e) optional bis zu 1,0 Gew.-% mindestens eines Weißpigments,
f) optional ein oder mehrere weitere Additive, vorzugsweise ausgewählt aus der Gruppe, bestehend aus Entformungsmitteln, Antioxidantien, Flammschutzmitteln, Antitropfmitteln, Thermostabilisatoren, optischen Aufhellern, Fließverbesserern, von Komponente d verschiedenen Lichtstreumitteln, Antistatika, UV-Absorber und/oder IR-Absorbern,
enthält.

10. LED-Beleuchtungseinheit nach einem der Ansprüche 1 bis 8, **dadurch gekennzeichnet, dass** die transluzente, thermoplastische Zusammensetzung der Trägerschicht a1 aus
a) 95 Gew.-% bis 99,95 Gew.-% aromatischem Polycarbonat,
b) einer Farbmittelmischung aus von Komponente c und Komponente e verschiedenen Farbmitteln, enthaltend mindestens zwei Farbmittel, ausgewählt aus der Gruppe, bestehend aus Farbmitteln auf Basis von Anthrachinon, Anthrapyridon, Perinon, Methin oder Chinolin,
in einer Gesamtmenge von 0,0005 Gew.-% bis 0,02 Gew.-%,
c) 0,00001 Gew.-% bis 0,02 Gew.-% Ruß,
d) 0,00001 bis 2 Gew.-% mindestens eines Streu-Additivs aus der Gruppe, bestehend aus Acrylat-basierten Streu-Additiven und/oder Silikon-basierten Streu-Additiven,
e) optional bis zu 1,0 Gew.-% mindestens eines Weißpigments,
f) optional einem oder mehreren weiteren Additiven, ausgewählt aus der Gruppe, bestehend aus Entformungsmitteln, Antioxidantien, Flammschutzmitteln, UV-Absorbern, IR-Absorbern, Fließverbesserern, von Komponente d verschiedenen Lichtstreumitteln, Antistatika, Antitropfmitteln, optischen Aufhellern und/oder Thermostabilisatoren,
besteht.

11. LED-Beleuchtungseinheit nach einem der Ansprüche 1 bis 8, **dadurch gekennzeichnet, dass** die transluzente, thermoplastische Zusammensetzung der Trägerschicht a1
a) mindestens 90 Gew.-% aromatisches Polycarbonat,
b) eine Farbmittelmischung aus von Komponente c verschiedenen Farbmitteln, enthaltend mindestens zwei Farbmittel, wobei ein Farbmittel ein Anthrachinon-basiertes Farbmittel und das andere Farbmittel ein Anthrapyridon-basiertes Farbmittel ist,
wobei die Gesamtmenge an Farbmitteln gemäß Komponente b) bis zu 0,1 Gew.-% beträgt,
c) 0,002 bis 0,020 Gew.-% Ruß,
d) 0,05 bis 1,0 Gew.-% mindestens eines Streu-Additivs aus der Gruppe, bestehend aus Acrylat-basierten Streu-Additiven und/oder Silikon-basierten Streu-Additiven,
f) optional ein oder mehrere weitere Additive, ausgewählt aus der Gruppe, bestehend aus Entformungsmitteln, Antioxidantien, Flammschutzmitteln, Antitropfmitteln, Thermostabilisatoren, Fließverbesserern, von Komponente d verschiedenen Lichtstreumitteln, Antistatika, UV-Absorbern und/oder IR-Absorbern,
enthält und
frei ist von Weißpigment.

12. LED-Beleuchtungseinheit nach einem der Ansprüche 1 bis 8, **dadurch gekennzeichnet, dass** die transluzente, thermoplastische Zusammensetzung der Trägerschicht
a) mindestens 90 Gew.-% aromatisches Polycarbonat,
b) eine Farbmittelmischung aus von Komponente c und Komponente e verschiedenen Farbmitteln, enthaltend mindestens zwei Farbmittel, wobei die Farbmittel ausgewählt sind aus der Gruppe, bestehend aus Farbmitteln auf Basis von Anthrachinon, Anthrapyridon, Perinon, Methin oder Chinolin,
wobei die Gesamtmenge an Farbmitteln gemäß Komponente b) bis zu 0,1 Gew.-% beträgt,
c) 0,0003 bis 0,020 Gew.-% Ruß,
d) 0,05 bis 1,0 Gew.-% mindestens eines Streu-Additivs aus der Gruppe, bestehend aus Acrylat-basierten Streu-Additiven und/oder Silikon-basierten Streu-Additiven,
e) 0,03 bis 1,0 Gew.-% mindestens eines Weißpigments,
f) optional ein oder mehrere weitere Additive, insbesondere ausgewählt aus der Gruppe, bestehend aus Entformungsmitteln, Antioxidantien, Flammschutzmitteln, Antitropfmitteln, Thermostabilisatoren, optischen Aufhellern, Fließverbesserern, von Komponente d verschiedenen Lichtstreumitteln, Antistatika, UV-Absorbern und/oder IR-Absorbern,
enthält.

13. LED-Beleuchtungseinheit nach einem der Ansprüche 9 bis 12, **dadurch gekennzeichnet, dass** der Ruß nanoskaliger Farbruß ist und als Streu-Additiv mindestens ein Silsesquioxan enthalten ist.

14. LED-Beleuchtungseinheit nach einem der vorhergehenden Ansprüche, **dadurch gekennzeichnet, dass** die LED-Beleuchtungseinheit ein Element zur Ausbildung eines Fußbodenbelags, zum Möbelbau, ein Wandpaneel, ein Türpaneel, Teil einer Lampe, ein Beleuchtungselement, ein Gehäuse von Haushalts- oder Elektrogeräten oder um ein Element aus dem Automobilbereich ist.

15. LED-Beleuchtungseinheit nach einem der vorhergehenden Ansprüche, **dadurch gekennzeichnet, dass** die LED-Beleuchtungseinheit ein Element aus dem Automobilbereich ist, und zwar ein Beleuchtungselement, ein Teil der Innenraumverkleidung, ein Teil eines Armaturenbretts, ein Teil einer Instrumententafel, eine Zierleiste, eine Einstiegsleiste, ein Teil einer Armauflage oder ein Teil einer Mittelkonsole.

## Claims

1. LED lighting unit comprising
a) a multilayer body and
b) a first LED light source,
wherein the multilayer body comprises the following layers in this sequence:
a1) a carrier layer of a translucent black or translucent grey thermoplastic composition,
a2) a stone layer having an average thickness over the total area of the stone layer of ≤ 2 mm,
a3) a transparent layer of a thermoplastic composition having an average thickness over the total area of 1 to 6 mm, on the face of the stone layer a2 that constitutes the visible face of the multilayer body in the LED lighting unit,
wherein the first LED light source is disposed at at least one lateral edge of the transparent layer a3 such that the transparent layer a3 is utilizable as light guide for light emitted by the LED light source.

2. LED lighting unit according to Claim 1, **characterized in that** the composition of the carrier layer a1 and/or the composition of the transparent layer a3 is/are based on aromatic polycarbonate.

3. LED lighting unit according to either of the preceding claims, **characterized in that** the thickness of the carrier layer a1, averaged over the total area of the carrier layer, is 0.5 to 6 mm.

4. LED lighting unit according to any of the preceding claims, **characterized in that** the multilayer body has a geometry other than that of a sheet, and/or **in that** the multilayer body does not have any further layers aside from the optional presence of protective layers.

5. LED lighting unit according to any of the preceding claims, **characterized in that** the average thickness of the stone layer over the total area of the stone layer a2 is ≤ 0.3 mm.

6. LED lighting unit according to any of the preceding claims, **characterized in that** the stone layer a2, at least on the flat side facing the transparent layer a3, has a topography having maximum roughness R_{z} of preferably at least 0.1 µm, wherein the maximum roughness R_{z} is determined as defined in the description.

7. LED lighting unit according to any of the preceding claims, **characterized in that** the transparent layer a3 covers the stone layer a2 over very substantially its full area, and/or **in that** the carrier layer a1 covers the stone layer a2 over its full area or projects beyond it at at least one lateral edge.

8. LED lighting unit according to any of the preceding claims, **characterized in that** the LED lighting unit has a second LED light source arranged in such a way that it backlights the multilayer body, and/or **in that** the second LED light source has one or more RGB LEDs.

9. LED lighting unit according to any of the preceding claims, **characterized in that** the translucent thermoplastic composition of the carrier layer a1 contains
a) at least 90% by weight of aromatic polycarbonate,
b) a colourant mixture composed of colourants other than component c and component e, comprising at least two colourants
in a total amount of up to 0.1% by weight of colourants of component b),
c) 0.00001% by weight to 0.05% by weight of carbon black,
d) 0.00001% to 2% by weight of at least one scattering additive from the group consisting of acrylate-based scattering additives and/or silicone-based scattering additives,
e) optionally up to 1.0% by weight of at least one white pigment,
f) optionally one or more further additives, preferably selected from the group consisting of demoulding agents, antioxidants, flame retardants, anti-dripping agents, thermal stabilizers, optical brighteners, flow improvers, opacifiers other than component d, antistats, UV absorbers and/or IR absorbers.

10. LED lighting unit according to any of Claims 1 to 8, **characterized in that** the translucent thermoplastic composition of the carrier layer a1 consists of
a) 95% by weight to 99.95% by weight of aromatic polycarbonate,
b) a colourant mixture composed of colourants other than component c and component e, comprising at least two colourants selected from the group consisting of colourants based on anthraquinone, anthrapyridone, perinone, methine and quinoline,
in a total amount of 0.0005% by weight to 0.02% by weight,
c) 0.00001% by weight to 0.02% by weight of carbon black,
d) 0.00001% to 2% by weight of at least one scattering additive from the group consisting of acrylate-based scattering additives and/or silicone-based scattering additives,
e) optionally up to 1.0% by weight of at least one white pigment,
f) optionally one or more further additives, selected from the group consisting of demoulding agents, antioxidants, flame retardants, UV absorbers, IR absorbers, flow improvers, opacifiers other than component d, antistats, anti-dripping agents, optical brighteners and/or thermal stabilizers.

11. LED lighting unit according to any of Claims 1 to 8, **characterized in that** the translucent thermoplastic composition of the carrier layer a1 contains
a) at least 90% by weight of aromatic polycarbonate,
b) a colourant mixture composed of colourants other than component c, comprising at least two colourants, one colourant being an anthraquinone-based colourant and the other colourant an anthrapyridone-based colourant,
where the total amount of colourants of component b) is up to 0.1% by weight,
c) 0.002% to 0.020% by weight of carbon black,
d) 0.05% to 1.0% by weight of at least one scattering additive from the group consisting of acrylate-based scattering additives and/or silicone-based scattering additives,
f) optionally one or more further additives, selected from the group consisting of demoulding agents, antioxidants, flame retardants, anti-dripping agents, thermal stabilizers, flow improvers, opacifiers other than component d, antistats, UV absorbers and/or IR absorbers,
and
is free of white pigment.

12. LED lighting unit according to any of Claims 1 to 8, **characterized in that** the translucent thermoplastic composition of the carrier layer contains
a) at least 90% by weight of aromatic polycarbonate,
b) a colourant mixture composed of colourants other than component c and component e, comprising at least two colourants, the colourants being selected from the group consisting of colourants based on anthraquinone, anthrapyridone, perinone, methine and quinoline,
where the total amount of colourants of component b) is up to 0.1% by weight,
c) 0.0003% to 0.020% by weight of carbon black,
d) 0.05% to 1.0% by weight of at least one scattering additive from the group consisting of acrylate-based scattering additives and/or silicone-based scattering additives,
e) 0.03% to 1.0% by weight of at least one white pigment,
f) optionally one or more further additives, especially selected from the group consisting of demoulding agents, antioxidants, flame retardants, anti-dripping agents, thermal stabilizers, optical brighteners, flow improvers, opacifiers other than component d, antistats, UV absorbers and/or IR absorbers.

13. LED lighting unit according to any of Claims 9 to 12, **characterized in that** the carbon black is nanoscale carbon black and the scattering additive present is at least one silsesquioxane.

14. LED lighting unit according to any of the preceding claims, **characterized in that** the LED lighting unit is an element for formation of a floor, for furniture making, a wall panel, a door panel, part of a lamp, a lighting element, a housing of domestic appliances or electrical equipment, or an element from the automotive sector.

15. LED lighting unit according to any of the preceding claims, **characterized in that** the LED lighting unit is an element from the automotive sector, specifically a lighting element, part of the inner trim, part of a dashboard, part of an instrument panel, a decorative strip, a doorsill strip, part of an armrest or part of a centre console.

## Revendications

1. Unité d'éclairage à DEL, comprenant
a) un corps multicouche et
b) une première source lumineuse à DEL,
dans laquelle le corps multicouche comprend les couches suivantes dans cet ordre :
a1) une couche de support constituée d'une composition thermoplastique noire translucide ou grise translucide,
a2) une couche de pierre présentant une épaisseur, moyennée sur toute la surface de la couche de pierre, de ≤ 2 mm,
a3) une couche transparente constituée d'une composition thermoplastique présentant une épaisseur, moyennée sur toute la surface, de 1 à 6 mm, laquelle se situe sur le côté de la couche de pierre a2 qui constitue la face visible du corps multicouche dans l'unité d'éclairage à DEL,
dans laquelle la première source lumineuse à DEL est disposée sur au moins un bord latéral de la couche transparente a3 de telle sorte que la couche transparente a3 soit utilisable en tant que guide de lumière pour la lumière émise par la source lumineuse à DEL.

2. Unité d'éclairage à DEL selon la revendication 1, **caractérisée en ce que** la composition de la couche de support a1 et/ou la composition de la couche transparente a3 est/sont à base de polycarbonate aromatique.

3. Unité d'éclairage à DEL selon l'une quelconque des revendications précédentes, **caractérisée en ce que** l'épaisseur de la couche de support a1, moyennée sur toute la surface de la couche de support, est de 0,5 à 6 mm.

4. Unité d'éclairage à DEL selon l'une quelconque des revendications précédentes, **caractérisée en ce que** le corps multicouche présente une géométrie autre qu'une plaque et/ou **en ce que** le corps multicouche ne présente aucune autre couche outre des couches de protection éventuellement présentes.

5. Unité d'éclairage à DEL selon l'une quelconque des revendications précédentes, **caractérisée en ce que** l'épaisseur de la couche de pierre, moyennée sur toute la surface de la couche de pierre a2, est de ≤ 0,3 mm.

6. Unité d'éclairage à DEL selon l'une quelconque des revendications précédentes, **caractérisée en ce que** la couche de pierre a2 présente, au moins sur la face plane tournée vers la couche transparente a3, une topographie dont la rugosité maximale R_{z} est de préférence d'au moins 0,1 µm, la rugosité maximale R_{z} étant déterminée comme défini dans la description.

7. Unité d'éclairage à DEL selon l'une quelconque des revendications précédentes, **caractérisée en ce que** la couche transparente a3 recouvre la couche de pierre a2 dans une large mesure sur toute la surface et/ou **en ce que** la couche de support a1 recouvre la couche de pierre a2 sur toute la surface ou dépasse de celle-ci sur au moins un bord latéral.

8. Unité d'éclairage à DEL selon l'une quelconque des revendications précédentes, **caractérisée en ce que** l'unité d'éclairage à DEL présente une deuxième source lumineuse à DEL qui est disposée de telle sorte qu'elle éclaire le corps multicouche par l'arrière et/ou **en ce que** la deuxième source lumineuse à DEL présente une ou plusieurs DEL RVB.

9. Unité d'éclairage à DEL selon l'une quelconque des revendications précédentes, **caractérisée en ce que** la composition thermoplastique translucide de la couche de support a1 contient
a) au moins 90 % en poids de polycarbonate aromatique,
b) un mélange de colorants constitué de colorants différents du constituant c et du constituant e, contenant au moins deux colorants,
en une quantité totale allant jusqu'à 0,1 % en poids de colorants selon le constituant b),
c) 0,00001 % en poids à 0,05 % en poids de noir de carbone,
d) 0,00001 à 2 % en poids d'au moins un additif de diffusion choisi dans le groupe constitué par les additifs de diffusion à base d'acrylate et/ou les additifs de diffusion à base de silicone,
e) éventuellement jusqu'à 1,0 % en poids d'au moins un pigment blanc,
f) éventuellement un ou plusieurs autres additifs, de préférence choisis dans le groupe constitué par les agents de démoulage, les antioxydants, les retardateurs de flamme, les agents anti-goutte, les stabilisants thermiques, les azurants optiques, les agents d'amélioration de l'écoulement, les agents de diffusion de la lumière différents du constituant d, les agents antistatiques, les absorbeurs d'UV et/ou les absorbeurs d'IR.

10. Unité d'éclairage à DEL selon l'une quelconque des revendications 1 à 8, **caractérisée en ce que** la composition thermoplastique translucide de la couche de support a1 est constituée de
a) 95 % en poids à 99,95 % en poids de polycarbonate aromatique,
b) un mélange de colorants constitué de colorants différents du constituant c et du constituant e, contenant au moins deux colorants choisis dans le groupe constitué par les colorants à base d'anthraquinone, d'anthrapyridone, de périnone, de méthine ou de quinoléine,
en une quantité totale de 0,0005 % en poids à 0,02 % en poids,
c) 0,00001 % en poids à 0,02 % en poids de noir de carbone,
d) 0,00001 à 2 % en poids d'au moins un additif de diffusion choisi dans le groupe constitué par les additifs de diffusion à base d'acrylate et/ou les additifs de diffusion à base de silicone,
e) éventuellement jusqu'à 1,0 % en poids d'au moins un pigment blanc,
f) éventuellement un ou plusieurs autres additifs choisis dans le groupe constitué par les agents de démoulage, les antioxydants, les retardateurs de flamme, les absorbeurs d'UV, les absorbeurs d'IR, les agents d'amélioration de l'écoulement, les agents de diffusion de la lumière différents du constituant d, les agents antistatiques, les agents anti-goutte, les azurants optiques et/ou les stabilisants thermiques.

11. Unité d'éclairage à DEL selon l'une quelconque des revendications 1 à 8, **caractérisée en ce que** la composition thermoplastique translucide de la couche de support a1 contient
a) au moins 90 % en poids de polycarbonate aromatique,
b) un mélange de colorants constitué de colorants différents du constituant c, contenant au moins deux colorants, l'un des colorants étant un colorant à base d'anthraquinone et l'autre colorant étant un colorant à base d'anthrapyridone,
la quantité totale de colorants selon le constituant b) allant jusqu'à 0,1 % en poids,
c) 0,002 à 0,020 % en poids de noir de carbone,
d) 0,05 à 1,0 % en poids d'au moins un additif de diffusion choisi dans le groupe constitué par les additifs de diffusion à base d'acrylate et/ou les additifs de diffusion à base de silicone,
f) éventuellement un ou plusieurs autres additifs choisis dans le groupe constitué par les agents de démoulage, les antioxydants, les retardateurs de flamme, les agents anti-goutte, les stabilisants thermiques, les agents d'amélioration de l'écoulement, les agents de diffusion de la lumière différents du constituant d, les agents antistatiques, les absorbeurs d'UV et/ou les absorbeurs d'IR,
et
est exempt de pigment blanc.

12. Unité d'éclairage à DEL selon l'une quelconque des revendications 1 à 8, **caractérisée en ce que** la composition thermoplastique translucide de la couche de support contient
a) au moins 90 % en poids de polycarbonate aromatique,
b) un mélange de colorants constitué de colorants différents du constituant c et du constituant e, contenant au moins deux colorants, les colorants étant choisis dans le groupe constitué par les colorants à base d'anthraquinone, d'anthrapyridone, de périnone, de méthine ou de quinoléine,
la quantité totale de colorants selon le constituant b) allant jusqu'à 0,1 % en poids,
c) 0,0003 à 0,020 % en poids de noir de carbone,
d) 0,05 à 1,0 % en poids d'au moins un additif de diffusion choisi dans le groupe constitué par les additifs de diffusion à base d'acrylate et/ou les additifs de diffusion à base de silicone,
e) 0,03 à 1,0 % en poids d'au moins un pigment blanc,
f) éventuellement un ou plusieurs autres additifs, choisis en particulier dans le groupe constitué par les agents de démoulage, les antioxydants, les retardateurs de flamme, les agents anti-goutte, les stabilisants thermiques, les azurants optiques, les agents d'amélioration de l'écoulement, les agents de diffusion de la lumière différents du constituant d, les agents antistatiques, les absorbeurs d'UV et/ou les absorbeurs d'IR.

13. Unité d'éclairage à DEL selon l'une quelconque des revendications 9 à 12, **caractérisée en ce que** le noir de carbone est un noir de carbone colorant à l'échelle nanométrique et **en ce qu'**au moins un silsesquioxane est présent en tant qu'additif de diffusion.

14. Unité d'éclairage à DEL selon l'une quelconque des revendications précédentes, **caractérisée en ce que** l'unité d'éclairage à DEL est un élément destiné à la formation d'un revêtement de sol, à la fabrication de meubles, un panneau mural, un panneau de porte, une partie d'une lampe, un élément d'éclairage, un boîtier d'appareils ménagers ou électriques ou un élément du secteur automobile.

15. Unité d'éclairage à DEL selon l'une quelconque des revendications précédentes, **caractérisée en ce que** l'unité d'éclairage à DEL est un élément du secteur automobile, à savoir un élément d'éclairage, une partie d'un habillage intérieur, une partie d'un tableau de bord, une partie d'un combiné d'instruments, une baguette décorative, un seuil de porte, une partie d'un accoudoir ou une partie d'une console centrale.
